(19) **Europäisches Patentamt / European Patent Office / Office européen des brevets**

(11) **EP 1 402 687 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***H04L 12/56*** *(2006.01)* ***H04L 12/46*** *(2006.01)*

(21) Anmeldenummer: **01945320.8**

(22) Anmeldetag: **27.06.2001**

(86) Internationale Anmeldenummer:
**PCT/EP2001/007347**

(87) Internationale Veröffentlichungsnummer:
**WO 2003/003667 (09.01.2003 Gazette 2003/02)**

(54) **VERFAHREN UND COMPUTERSYSTEM ZUM ERMITTELN EINER DATENFLUSSHIERARCHIE IN EINEM COMPUTERNETZWERK**

METHOD AND COMPUTER SYSTEM FOR DETERMINING A DATA FLOW HIERARCHY IN A COMPUTER NETWORK

PROCEDE ET SYSTEME INFORMATIQUE PERMETTANT DE DETERMINER UNE HIERARCHIE DE FLUX DE DONNEES DANS UN RESEAU INFORMATIQUE

(84) Benannte Vertragsstaaten:
**DE FR GB**

(43) Veröffentlichungstag der Anmeldung:
**31.03.2004 Patentblatt 2004/14**

(73) Patentinhaber: **Infosim Networking Solutions AG 97082 Würzburg (DE)**

(72) Erfinder:
- **MENTH, Michael
  97255 Oellingen (DE)**
- **TRAN-GIA, Phuoc
  97076 Würzburg (DE)**

(74) Vertreter: **Schmidt, Steffen J.
Wuesthoff & Wuesthoff
Patent- und Rechtsanwälte
Schweigerstrasse 2
81541 München (DE)**

(56) Entgegenhaltungen:
**EP-A- 0 740 441**

- **RAVINDRAN ET AL: "Resource allocation control protocols for multicast data transport" COMPUTER COMMUNICATIONS AND NETWORKS, 1997. PROCEEDINGS., SIXTH INTERNATIONAL CONFERENCE ON LAS VEGAS, NV, USA 22-25 SEPT. 1997, LOS ALAMITOS, CA, USA, IEEE COMPUT. SOC, US, 22. September 1997 (1997-09-22), Seiten 182-188, XP010245747 ISBN: 0-8186-8186-1**
- **BENJAMIN S ; RUBIN I: "Path merging and destination removal: new forwarding paradigms in packet switching networks" GLOBECOM '00 - IEEE. GLOBAL TELECOMMUNICATIONS CONFERENCE., 27. - 1. Dezember 2000, XP002182414 San Francisco, CA, USA**
- **GERSTEL O ET AL: "THE LAYOUT OF VIRTUAL PATHS IN ATM NETWORKS" IEEE / ACM TRANSACTIONS ON NETWORKING, IEEE INC. NEW YORK, US, Bd. 4, Nr. 6, 1. Dezember 1996 (1996-12-01), Seiten 873-884, XP000636036 ISSN: 1063-6692**

**Beschreibung**

Die Erfindung betrifft ein Verfahren und eine Vorrichtung zum computergestützten Ermitteln einer Hierarchie von mittels Tunnels mehrfach aggregierten Datenflüssen in einem Netzwerk.

Besondere Aufmerksamkeit wird in jüngster Zeit Echtzeit-Netzwerkdiensten entgegengebracht. Das sind Dienste, die vom Transportmedium eine gewisse Dienstgüte (Quality of Service, QoS) verlangen, welche vor allem eines geringen Paket-Verlustes und einer kurzen Paket-Verzögerung bedarf. Beispiele für solche Dienste z.B. im Internet sind Anwendungen wie Telephonie, Radio, Video-Konferenz, schnell verfügbare Multimedia-Inhalte auf Werbeseiten, Telemedizin und Fernunterricht.

Diese Anwendungen unterstreichen den Bedarf an QoS-Mechanismen, die einem Benutzer garantieren, auch im Falle von Überlast im Netzwerk eine gebuchte Bandbreite voll nutzen zu können. Im einfachsten Fall möchte der Benutzer eine statische virtuelle Leitung (Virtual Leased Line, VLL) bzw. ein virtuelles Netzwerk (Virtual Private Network, VPN) mieten. Hier wird dem Benutzer über längere Zeit eine Übertragungsschnittstelle zur Verfügung gestellt, deren Datenübertragungsbandbreite sich nicht von der eines allein genutzten Kommunikationskanals unterscheiden soll. Eine dynamischere Unterstützung wird benötigt, wenn QoS für einen einzelnen Datenfluss verlangt wird, wie es z.B. bei einer Video-Konferenz der Fall ist. Derartige QoS-Anfragen bleiben nur über einen relativ kurzen Zeitraum bestehen.

Die verlangte Dienstgüte für die oben beschriebenen Szenarien kann für die einzelnen Datenflüsse durch geschickte Wahl der Paket-Bearbeitungsreihenfolge (Scheduling) in den beteiligten Transport-Rechnern (Router) des Netzwerks gewährleistet werden. Diese Steuerrechner brauchen hierfür eine Beschreibung für jeden Datenfluss, der mit einer absoluten Garantie behandelt werden soll. Diese Beschreibung wird in Gestalt von Verbindungsdaten in der Router-Datenbank (Management Information Base, MIB) abgelegt. Die Verbindungsdaten werden dort durch Signalisierungsprotokolle wie das Resource Reservation Protocol (RSVP) oder das Label Distribution Protocol (LDP) eingerichtet.

Die Verbindungsdaten enthalten Informationen (Zustandsinformationen) für die Zugangskontrolle, die Paket-Klassifizierung und Parameter für das Scheduling. Die Zugangskontrolle erlaubt einen weiteren Datenfluss nur dann, wenn durch ihn die gebuchte QoS der anderen Verbindungen nicht verletzt wird. Der Paket-Klassifizierer erkennt die Pakete der einzelnen Verbindungen und ordnet sie einer Klasse im Scheduler zu, der sie dann bevorzugt behandelt. Ein einzelner Fluss, der durch RSVP mit QoS versorgt wird, wird im Folgenden RSVP-Fluss genannt.

Die Anzahl der Datenflüsse mit Echtzeitanforderungen ist im Zugangsbereich z.B. des Internets (lokale Rechenzentren) relativ niedrig und stellt somit für die dortigen Router keine Überforderung dar. Im Kernbereich des Internets konzentrieren sich jedoch die Echtzeitflüsse. Die Menge der zu verwaltenden Zustandsinformationen, die in den Datenbanken der Router ständig aktualisiert werden müssen, ist daher im Kernbereich sehr groß.

Eine Möglichkeit zur Verringerung der pro Router zu verwaltenden Zustandsinformationen ist Multi Protocol Label Switching (MPLS). Beim Multi Protocol Label Switching werden mehrere Datenflüsse mit einem gemeinsamen Label versehen und dadurch aggregiert, d.h. gebündelt. Die Pakete unterschiedlicher Datenflüsse mit demselben Label werden nicht mehr unterschieden. Sie werden vielmehr in den Routern entlang der Strecke, auf der ein gemeinsames Label existiert, als ein einziger aggregierter Datenfluss behandelt. Ein Fluss, der mit einem MPLS-Label versehen ist, wird MPLS-Fluss genannt.

In der Multi Protocol Label Switching (MPLS) Technologie wird ein Label Switched Path (LSP) errichtet. Dieser Pfad ermöglicht die einfachere Paketvermittlung (Packet Switching) an Stelle der Datenflusssteuerung durch Packet Routing. Die Errichtung eines LSP geschieht durch Ausstattung der Label Switched Router (LSR) auf diesem Pfad mit einer Tabelle für den Wechsel der MPLS-Label (Label Swapping). Bei diesem Wechsel wird einem Tupel aus Eingangs-Schnittstelle und Eingangs-Label ein Tupel aus Ausgangs-Schnittstelle und Ausgangs-Label zugeordnet.

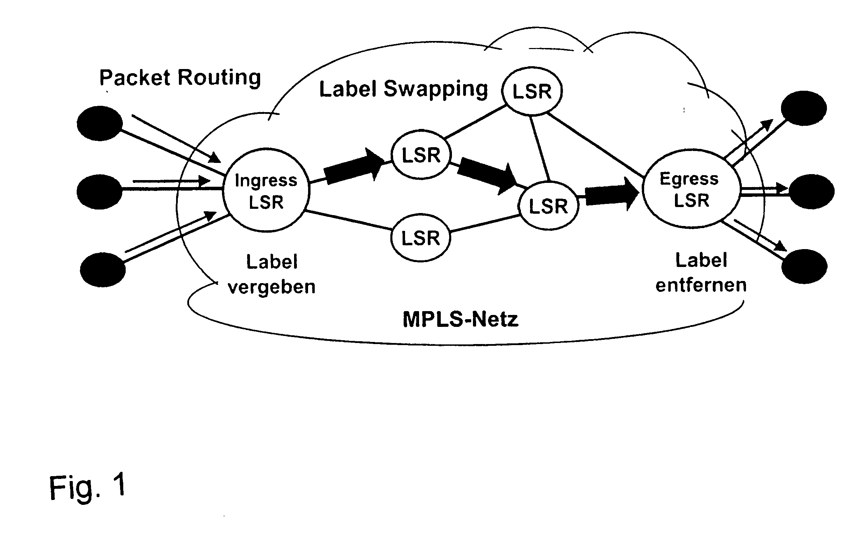

Der erste LSR auf einem LSP (Ingress LSR) prüft alle ankommenden IP-Pakete, ob sie über diesen LSP fließen können. Die Pakete werden mit dem richtigen Ausgangs-Label versehen und zur passenden Ausgangs-Schnittstelle weitergeleitet. Die entlang des LSP angeordneten LSR müssen nun die Label gemäß den Tabellen-Einträgen wechseln und den Verkehr zu den entsprechenden Ausgangs-Schnittstellen leiten. Der letzte LSR auf dem LSP (Egress LSR) entfernt das Label vom IP-Paket. Diese Art der Paketweiterleitung in einem MPLS-Netz ist in Fig. 1 dargestellt.

Die Errichtung eines LSP bedingt, dass in den MIB der beteiligten Router Zustandsinformationen in z.B. in Form der vorstehend erwähnten Tabellen verwaltet werden müssen. Diese Verwaltung benötigt Speicher- und Prozessorkapazität. Die Anzahl der möglichen LSP zum Transport der aggregierten Datenflüsse ist daher durch die Verwaltungskapazität der Router begrenzt.

Für die Aggregierung der Datenflüsse stehen prinzipiell zwei Möglichkeiten zur Verfügung. Gemäß einer ersten Möglichkeit (Trichter) werden die obersten Label der zu aggregierenden MPLS-Flüsse durch ein neues, gemeinsames Label ersetzt. Auf Grund dieser Vorhergehensweise kann die ursprüngliche Gruppierung nach dem Entfernen des gemeinsamen Labels nicht wieder hergestellt werden, d.h. Information bezüglich der einzelnen Datenflüsse geht verloren.

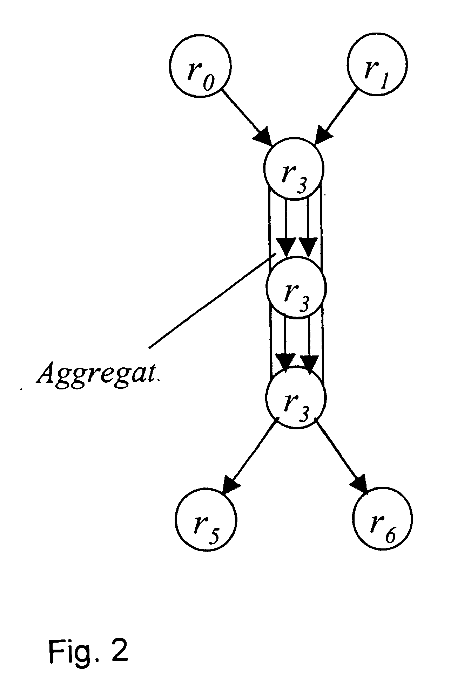

Gemäß einer zweiten Möglichkeit (Tunnel) bleiben die obersten Label der beiden Datenflüsse erhalten und ein neues, gemeinsames Label wird dem Labelstapel hinzugefügt. Die mit dem gemeinsamen Label versehenen Flüsse werden anschließend über den selben LSP transportiert. Nachdem der Ausgangs-Router des LSP das oberste Label entfernt hat, können die ursprünglichen Datenflüsse daher wieder hergestellt werden (Fig. 2). Der LSP fungiert als eine logische Verbindung und die zwischengeschalteten LSR sehen die individuellen Reservierungen der Datenflüsse nicht, da die RSVP Steuerinformationen als MPLS-Pakete an den LSR umgehen. Aus diesem Grund gestatten Tunnels nicht nur eine Reservierungsaggregation und -deaggregation, sondern auch eine Verringerung der in den zwischengeschalteten Routern zu verwaltenden Zustandsinformationen. Das Tunnelkonzept skaliert jedoch in vielen Netzwerktopologien äußerst ungünstig. Betrachtet man beispielsweise ein Sternnetzwerk, so muss der Zentrumsknoten alle möglichen Tunnels verwalten. Dies entspricht N x (N-1) LSP. Folglich skaliert die Anzahl der Pfade quadratisch mit der Netzwerkgröße.

Zur Verbesserung des Skalierverhaltens wird in T. Li and Y. Rekhter, "RFC2430: A Provider Architecture for Differentiated Services and Traffic Engineering (PASTE)." ftp://ftp.isi.edu/innotes/rfc2430.txt, Oct. 1998 vorgeschlagen, die mittels Vergabe eines MPLS-Labels aggregierten Flüsse weiter zu aggregieren. Auf Grund von mehrfach übergeordneter Label-Vergabe (Multiple Label Stacking) kann ein MPLS-Fluss dann selbst wieder mehrere andere MPLS-Flüsse beinhalten. Durch das Bündeln verschiedener Flüsse zu einem übergeordneten MPLS-Fluss geschieht Verkehrsaggregation.

Zwei mit einem unterschiedlichen MPLS-Label versehene Datenflüsse können immer dann weiter aggregiert werden, wenn der jeweilige Pfad der Datenflüsse zumindest bereichsweise übereinstimmt. Zur Aggregierung zweier mit unterschiedlichen MPLS-Labeln versehener Datenflüsse wird ein neues, gemeinsames Label auf den Labelstapel jedes der beiden Datenflüsse hinzugefügt. Auf diese Weise kann eine Mehrzahl von Datenflüssen mit unterschiedlichen MPLS-Labeln innerhalb eines einzigen Tunnels aggregiert werden. Die mehrfache Aggregierung von MPLS-Pfaden verbessert das Skalierungsverhalten deutlich.

Die Veröffentlichung "Resource Allocation Control Protocols For Multicast Data Transport", K. Ravindran und T. J. Gong, Computer communications and networks, 1997. Proceedings., sixth international conference on Las Vegas, NV, USA 22-25 Sept. 1997, Los Alamitos, CA, USA, IEEE Comput. Soc, US, 22. September 1997 (1997-09-22), Seiten 182 bis 188 offenbart das "Routing" und die Zuweisung von Ressourcen für Multicast-Datenflüsse zu kombinieren. Insbesondere wird eine Aggregation von Datenflüssen in einem Multicast-Baum offenbart, so dass die Datenflüsse Ressourcen gemeinsam nutzen können.

Der Erfindung liegt die Aufgabe zu Grunde, ein Verfahren und eine Vorrichtung anzugeben, welche das Erstellen einer virtuellen Hierarchie von mittels Tunnels mehrfach aggregierten Datenflüssen in einem Netzwerk gestattet.

Die Aufgabe wird durch ein Verfahren gemäß Anspruch 1, ein Computerprogrammprodukt gemäß Anspruch 21, ein digitales Speichermedium gemäß Anspruch 22 und ein Computersystem gemäß Anspruch 23 gelöst.

Es werden folgende Schritte offenbart: Bereitstellen einer Netzwerktopologie und von Informationen betreffend die Datenflüsse innerhalb des Netzwerks, Bereitstellen von aus netzwerktechnischen Anforderungen abgeleiteten, graphentheoretischen Randbedingungen und Erstellen eines Hierarchiegraphen auf der Grundlage der Netzwerktopologie und der Informationen betreffend die Datenflüsse innerhalb des Netzwerks unter Berücksichtigung der graphentheoretischen Randbedingungen.

Es wird ein graphentheoretischer Ansatz zum Auffinden einer geeigneten virtuellen Hierarchie mehrfach aggregierter Datenflüsse offenbart. Der Hierarchiegraph spiegelt die virtuelle Hierarchie, d.h. die Ordnung bzw. Verschachtelung, der mehrfach aggregierten Datenflüsse wieder und kann daher als Grundlage für die Konfiguration der Datenflüsse in einem realen Netzwerk herangezogen werden. Es hat sich herausgestellt, dass sich aus einer graphentheoretischen Notation der Hierarchie aggregierter Datenflüsse unmittelbar eine diese Datenflusshierarchie verwirklichende Netzwerkkonfiguration ableiten lässt.

Das Netzwerk kann daher gemäß dem erstellten Hierarchiegraphen konfiguriert werden. Dies kann in Echtzeit geschehen. Der Hierarchigraph muss jedoch nicht notwendigerweise in Echtzeit berechnet werden. In der Regel ist es ausreichend, den Hierarchiegraphen jedes Mal dann neu zu berechnen, wenn sich die Datenflussmatrix ändert.

Zweckmäßigerweise erfolgt das Erstellen des Hierarchiegraphen unter Verwendung graphentheoretischer Operatoren. Die graphentheoretischen Operatoren gestatten ein einfaches Formulieren und Verifizieren der graphentheoretischen Randbedingungen.

Die graphentheoretischen Randbedingungen, welche zum Erstellen des Hierarchiegraphen herangezogen werden, können eine Vielzahl unterschiedlicher Anforderungen berücksichtigen. So ist es beispielsweise möglich, graphentheoretische Randbedingungen aus den aus der Datenflussaggregation als solcher resultierenden Anforderungen innerhalb eines Netzwerks abzuleiten. Weitere graphentheoretische Randbedingungen können sich aus den zur Datenflussaggregierung im Einzelfall verwendeten Mechanismen wie MPLS ergeben. Graphentheoretische Randbedingungen können z.B. auch aus der Forderung resultieren, die innerhalb des Netzwerks oder eines Teils des Netzwerks im Rahmen von z.B. QoS- oder MPLS-Mechanismen zu verwaltenden Zustandsinformationen zu minimieren, d.h. den Hierarchiegraphen unter dem Gesichtspunkt einer Minimierung der zu verwaltenden Zustandsinformationen zu erstellen.

Zum Zweck des Minimierens der zu verwaltenden Zustandsinformationen kann während des Erstellens oder nach dem Erstellen des Hierarchiegraphen dieser lokal und/oder global im Hinblick auf den Umfang der Zustandsinformationen, welche für die Realisierung der dem Hierarchiegraphen entsprechenden Netzwerkkonfiguration zu verwalten sind, bewertet werden. Bei einem Netzwerk, welches einen oder mehrere Router umfasst, können beim Bewerten des Hierarchiegraphen die zu verwaltenden Zustandsinformationen für jeden Router separat ermittelt werden.

Es kann auch daran gedacht werden, eine Mehrzahl unterschiedlicher Hierarchiegraphen zu ermitteln und zu bewerten und den am besten bewerteten Hierarchiegraphen zur Konfiguration des Netzwerks, d.h. zum Aggregieren der Datenflüsse, heranzuziehen. Das Bewerten eines Hierarchiegraphen erfolgt beispielsweise mittels einer Kostenfunktion.

Es hat sich als zweckmäßig erwiesen, beim Bewerten des Hierarchiegraphen zwischen RSVP-Zustandsinformationen und MPLS-Zustandsinformationen zu unterscheiden. Beide Arten von Zustandsinformationen lassen sich z.B. durch Analyse der im Hierarchiegraphen angeordneten Knoten und Transportbeziehungen zwischen den Knoten ableiten. Die Transportbeziehungen können Richtungsinformationen enthalten und eine Vater-Sohn-Beziehung in der Knotenhierarchie kenntlich machen.

Der Hierarchiegraph kann einzelne Komponenten einer Netzwerktopologie sowie Datenflüsse umfassen. So können physikalische Netzwerkverbindungen, aggregierte Datenflüsse, nicht aggregierte Datenflüsse, usw. als Knoten im Hierarchiegraphen dargestellt werden. Auf der Grundlage einer derartigen Notation kann die Ermittlung der oben beschriebenen RSVP-Zustandsinformationen durch Bestimmen der Anzahl der Söhne einer physikalischen Netzwerkverbindung oder eines aggregierten Datenflusses geschehen. Die Ermittlung der MPLS-Zustandsinformationen ist mittels Bestimmung der Anzahl der Väter einer physikalische Netzwerkverbindung oder eines aggregierten Datenflusses möglich.

Der Hierarchiegraph kann durch sukzessives Einfügen der einzelnen Knoten erstellt werden. Die in den Hierarchiegraphen einzufügenden Knoten lassen sich beispielsweise dadurch ermitteln, dass zu einem gegebenen Musterpfad innerhalb des Hierarchiegraphen jeweils ein Knoten gesucht wird, der den Musterpfad ganz oder teilweise enthält. Während des Erstellens oder nach dem Erstellen des Hierarchiegraphen können alle Knoten geändert, gelöscht oder nicht eingefügt werden, welche die graphentheoretischen Randbedingungen nicht erfüllen.

Vorzugsweise werden im Hierarchiegraphen die physikalischen Netzwerkverbindungen als Wurzeln (niedrigste Ebene) und die nicht aggregierten Datenflüsse als Blätter (höchste Ebene) angeordnet. Die ein- oder mehrfach aggregierten Datenflüsse können zwischen die Wurzeln und die Blätter eingefügt werden.

Obwohl das erfindungsgemäße Verfahren zum Ermitteln einer virtuellen Hierarchie mehrfach aggregierter Datenflüsse auf der Grundlage unterschiedlichster Aggregationsmechanismen durchgeführt werden kann, ist eine Aggregation unter Zuhilfenahme von MPLS bevorzugt. So können im Rahme einer ersten Aggregation nicht aggregierte Datenflüsse zu LSP-Datenflüssen aggregiert werden. Die derart generierten LSP-Datenflüsse lassen sich bei nachfolgenden Aggregationen hierarchisch weiter aggregieren.

Zweckmäßigerweise wird das vorstehend beschriebene Verfahren auf einem Computersystem, welches Teil eines Computernetzwerks wie das Internet sein kann, durchgeführt. Eine mögliche Ausgestaltung des Computersystems umfasst einen ersten Speicherbereich zum Abspeichern einer Netzwerktopologie und von Informationen betreffend Datenflüsse innerhalb des Netzwerks, einen zweiten Speicherbereich zum Abspeichern von aus netzwerktechnischen Anforderungen abgeleiteten graphentheoretischen Randbedingungen und eine Einheit zum Erstellen des Hierarchiegraphen auf der Grundlage der Netzwerktopologie und der Informationen betreffend die Datenflüsse innerhalb des Netzwerks unter Berücksichtigung der graphentheoretischen Randbedingungen.

Gemäß einer bevorzugten Ausführungsform besitzt das Computersystem außerdem eine Einheit zum Bewerten des erstellten Hierarchiegraphen im Hinblick auf den Umfang der Zustandsinformationen, welche innerhalb des Netzwerks oder eines Teils des Netzwerks für die Realisierung einer dem Hierarchiegraphen entsprechende Netzwerkkonfiguration zu verwalten sind. Eine derartige Bewertungseinheit gestattet das Auffinden eines Hierarchiegraphen, welcher unter dem Gesichtspunkt einer Minimierung der zu verwaltenden Zustandsinformationen optimiert ist.

Weitere Einzelheiten und vorteilhafte Ausgestaltungen der Erfindung ergeben sich aus den Ausführungsbeispielen und den Figuren. Es zeigt:

Fig. 1     die Paketweiterleitung in einem MPLS-Netzwerk;

Fig. 2     das Bilden eines aggregierten Datenflusses mittels ei- nes Tunnels;

Fig. 3     ein erfindungsgemäßes Computersystem zum Ermitteln ei- ner Datenflusshierarchie in einem Computernetzwerk;

Fig. 4     eine Netzwerktopologie mit nicht aggregierten sowie aggregierten Datenflüssen;

Fig. 5     einen Hierarchiegraphen für das Aggregationsszenario gemäß Fig. 4;

Fig. 6    einen alternativen Hierarchiegraphen basierend auf ei- nem Netzwerkszenario gemäß Fig. 4 mit geänderter Da- tenflussaggregation;

Fig. 7    ein erstes Suchverfahren nach einem Knoten im Hierar- chiegraphen;

Fig. 8    ein zweites Suchverfahren nach einem Knoten im Hierar- chiegraphen;

Fig. 9    eine erste Vorgehensweise zum Implementieren der gra- phentheoretischen Randbedingungen;

Fig. 10   eine zweite Vorgehensweise zum Implementieren von gra- phentheoretischen Randbedingungen;

Fig. 11   eine erste Strategie zum Einfügen eines neuen Knotens in den Hierarchiegraphen;

Fig. 12   eine zweite Strategie zum Einfügen eines neuen Knoten in den Hierarchiegraphen;

Fig. 13   eine dritte Vorgehensweise zum Implementieren von gra- phentheoretischen Randbedingungen;

Fig. 14   eine vierte Vorgehensweise zum Implementieren von gra- phentheoretischen Randbedingungen;

Fig. 15   eine fünfte Vorgehensweise zum Implementieren von gra- phentheoretischen Randbedingungen;

Fig. 16   das Bewerten von QoS-Zuständen mittels einer Kosten- funktion;

Fig. 17   das Bewerten von MPLS-Zuständen mittels einer Kosten- funktion;

Fig. 18   eine graphische Darstellung von Simulationsergebnissen zur Reduzierung von MPLS-Zuständen für verschiedene Einfügestrategien; und

Fig. 19   eine graphische Darstellung der Reduzierung von QoS- Zuständen bei einmaliger Datenflussaggregation und bei rekursiver Datenflussaggregation.

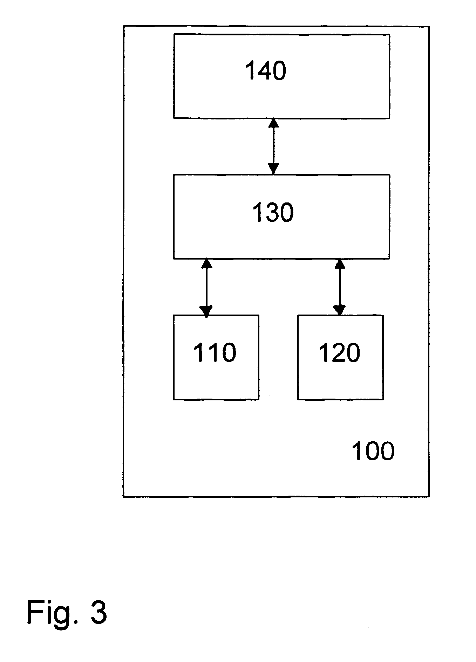

In Fig. 3 ist ein erfindungsgemäßes Ausführungsbeispiel eines Computersystems 100 zum Ermitteln einer virtuellen Hierarchie von mittels Tunnels mehrfach aggregierten Datenflüssen schematisch dargestellt. Das Computersystem 100 umfasst einen ersten Speicherbereich 110 und einen zweiten Speicherbereich 120. Der erste Speicherbereich 110 dient zum Abspeichern der Netzwerktopologie und von Informationen betreffend Datenflüsse innerhalb des Netzwerks. Der zweite Speicherbereich 120 ist zum Abspeichern von aus netzwerktechnischen Anforderungen abgeleiteten, graphentheoretischen Randbedingungen vorgesehen.

Das Computersystem 100 umfasst zusätzlich eine Einheit 130 zum Erstellen eines Hierarchiegraphen auf der Grundlage der Netzwerktopologie und der Informationen betreffend die Datenflüsse innerhalb des Netzwerks unter Berücksichtigung der graphentheoretischen Randbedingungen. Diese Einheit 130 greift sowohl auf den ersten Speicherbereich 110 als auch auf den zweiten Speicherbereich 120 zu. Außerdem kommuniziert die Einheit 130 mit einer Einheit 140 zum Bewerten des erstellten Hierarchiegraphen im Hinblick auf den Umfang der Zustandsinformationen, welche bei einer technischen Implementierung des Hierarchiegraphen zu verwalten sind. Zweckmäßigerweise ist das Computersystem 100 Teil des Computernetzwerks, für welches eine Reduzierung der zu verwaltenden Zustandsinformationen angestrebt ist.

Nachfolgend wird das Erstellen und Bewerten einer graphentheoretischen Notation mittels des Computersystems 100 gemäß Fig. 3 beispielhaft anhand eines LSP-Hierarchiegraphen $H$ beschrieben.

Eine Netzwerktopologie $N = (R, S)$ besteht aus einer Menge $R$ von Routern r, welche durch eine Menge $S$ von gerichteten Netzwerksegmenten s miteinander verbunden sind. Die Beziehung s: $r_0 \rightarrow r_1$, $r_0, r_1 \in R$, $s \in S$ bringt zum Ausdruck, dass das Netzwerksegment s in Router $r_0$ als Ausgangsschnittstelle und in Router $r_1$ als Eingangsschnittstelle fungiert.

Die Netzwerksegmente s sind geordnet. Es gilt $s_0 < s_1$ wenn Knoten, d.h. Router $r_0$, $r_1$, $r_2 \in R$ derart existieren, dass $s_0: r_0 \rightarrow r_1$ und $s_1 : r_1 \rightarrow r_2$ gilt. Diese Ordnung ist nicht absolut.

Ein Pfad p = $[s_i]_{0 \leq i < n}$ in einem Graphen $N$ ist eine geordnete Liste an Segmenten $s_i$ derart, dass für $0 \leq i < n-1$ die Beziehung $s_i < s_{i+1}$ gilt. Der Operator *length* (*p*) ergibt die Anzahl der in einem Pfad p enthaltenen Netzwerksegmente s. Ein Pfad p enthält einen weiteren Pfad q, wenn Segmente von q in der selben Ordnung in p enthalten sind. Es gilt dann p $\supseteq$ q. Der Schnitt p$\cap$q zweier Pfade p und q ist der Satz maximaler Pfade, welcher sowohl in p als auch in q enthalten ist. Ein Weg innerhalb des Netzwerks entspricht unmittelbar einem Pfad innerhalb des Graphen $N$.

Ein Datenfluss oder kurz "Fluss" ist ein Satz Pakete, welche entlang eines gemeinsamen Wegs transportiert werden und durch Attribute weiter gekennzeichnet werden können. Der Opertor *path* (*f*) liefert den Pfad des Flusses f. Die Länge des Flusses f ist definiert durch die Länge seines dazugehörigen Pfades.

Nicht aggregierte Datenflüsse e innerhalb eines Netzwerks werden als Mikro-Datenflüsse (Micro Flows oder End-to-End Flows) bezeichnet. Sie umfassen eine Mehrzahl von IP-Paketen, welche dieselbe Quellen- und Ziel-IP-Addresse und dieselbe UDP-Portnummer besitzen. Die Menge der nicht aggregierten Flüsse e ist *E*.

Im Rahmen von MPLS werden die nicht aggregierten Datenflüsse e zum Zweck der Aggregation mit einem Label versehen. Ein LSP transportiert die Pakete eines aggregierten MPLS-Datenflusses a. Auf Grund von mehrfach übergeordneter Label-Vergabe (Multiple Label Stacking) kann ein MPLS-Datenfluss a selbst wiederum andere MPLS-Datenflüsse a beinhalten. Einzelne MPLS-Datenflüsse a mit einem gemeinsamen Pfad lassen sich daher zu einem übergeordneten MPLS-Datenfluss a aggregieren. Die Menge aller MPLS-Datenflüsse a, welche durch Aggregation von nicht aggregierten Datenflüssen e oder durch rekursive Aggregation von MPLS-Flüssen a entsteht, wird mit *A* bezeichnet. Ein IP-Paket kann Teil eines nicht aggregierten Datenflusses e und gleichzeitig Teil mehrerer aggregierter MPLS-Datenflüsse a, welche im Labelstapel des IP-Pakets angegeben sind, sein.

Wie eingangs erläutert, gestattet die rekursive Aggregation ein vorteilhaftes Skalierungsverhalten der innerhalb des Netzwerks oder eines Teils davon zu verwaltenden Zustandsinformationen. Dies ermöglicht es, innerhalb des Netzwerks eine Zugangskontrolle (Admission Control, AC) vorzunehmen, um Datenflüsse hoher Priorität bevorzugt transportieren zu können. Die rekursive Aggregation kann durch hierarchisches Tunneln einzelner LSP erreicht werden. Mit anderen Worten: Mittels Tunnels werden mehrere niedere LSP zu einem höheren LSP aggregiert.

Nachfolgend wird ausgeführt, wie auf der Grundlage der durch den Graphen N charakterisierten Netzwerktopologie und von Informationen betreffend die Datenflüsse innerhalb des Netzwerks (Datenflussmatrix) ein Hierarchiegraph $H = (S \cup A \cup E, T)$ einer LSP Hierarchie generiert werden kann. Die Menge S der Netzwerksegmente entspricht den physikalischen Verbindungen (physical links) des Netzwerks. Die Menge A aggregierter Datenflüsse besteht selbst aus Datenflüssen und kann als eine Menge virtueller Verbindungen (virtual links) aufgefasst werden. Die Menge E nicht aggregierter Datenflüsse e entspricht den eigentlich zu transportierenden Flüssen. Die Menge $S \cup A \cup E$ kennzeichnet die Knoten des Hierarchiegraphen. Die Menge T charakterisiert die gerichteten Transportbeziehungen zwischen den einzelnen Knoten, d.h. den Links und Datenflüssen.

Wird der Datenfluss b über den Link a transportiert, wird a Vater des Datenflusses b entlang *path* (*a*) genannt. Wenn es sich bei dem Datenfluss b um einen nicht aggregierten Fluss handelt, ist a entweder eine physikalische Verbindung oder label(a) entspricht dem obersten Label. Handelt es sich bei dem Datenfluss b hingegen um einen aggregierten Datenfluss, dann ist *label* (*b*) das unterste Label des Stapels, falls a eine physikalische Verbindung ist, ansonsten befindet sich label (b) unmittelbar oberhalb von *label (a).* Wenn a Vater von b ist, wird der Datenfluss b als Sohn von a bezeichnet. Der Opertor *sons (a)* liefert die Menge aller Flüsse, welche Söhne von a sind und der Operator *fathers (b)* liefert alle Väter von b.

Es ist möglich, die Operatoren *fathers* und *sons* auf eine Menge an Datenflüssen anzuwenden, so dass sich die Vereinigung ihrer Väter bzw. Söhne ergibt. Dies vorausgesetzt, können die Nachfahren eines Flusses durch *offspring* $(f) = U_{1 \leq 5 < \infty} \, sons^i \, (f)$ und die Vorfahren eines Flusses durch *ancestors* $(f) = U_{1 \leq i < \infty} \, fathers^i \, (f)$ definieren.

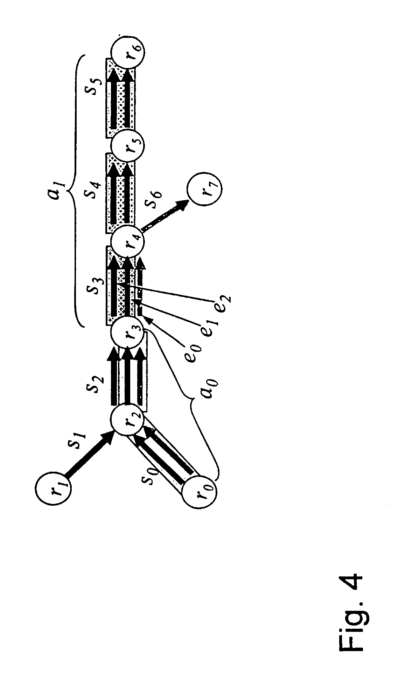

In Fig. 4 ist der Graph N einer Netzwerktopologie dargestellt. Die Netzwerktopologie umfasst eine Mehrzahl von Routern $r_i$ und Netzwerksegmenten $s_i$. In Fig. 4 sind zusätzlich zur Netzwerktopologie Informationen betreffend die Datenflüsse (nicht aggregierte Datenflüsse $e_i$ und aggregierte Datenflüsse $a_i$) innerhalb des Netzwerks dargestellt.

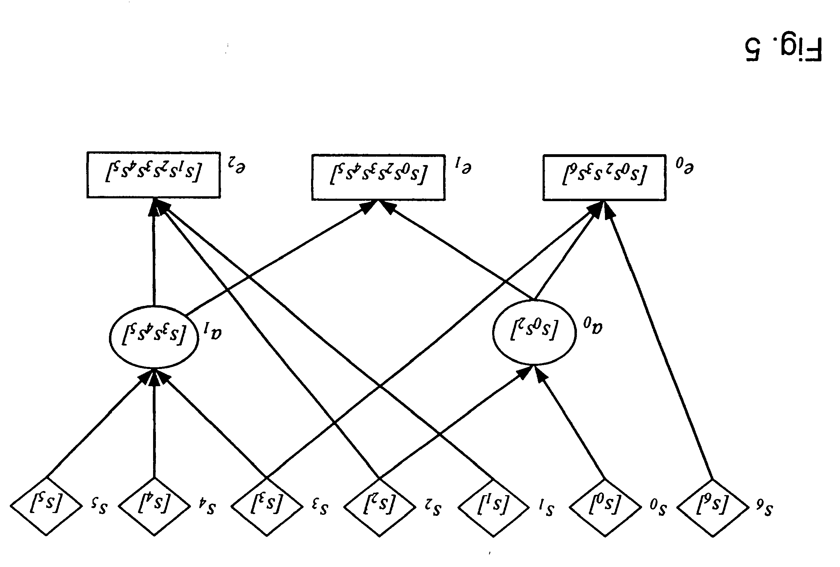

Basierend auf der Netzwerktopologie und der Datenflussmatrix gemäß Fig. 4 lässt sich der in Fig. 5 dargestellte Hierarchiegraph H einer LSP-Hierarchie erstellen. Der in Fig. 5 dargestellte Hierarchiegraph H entspricht daher der in Fig. 4 dargestellten Netzwerkkonfiguration.

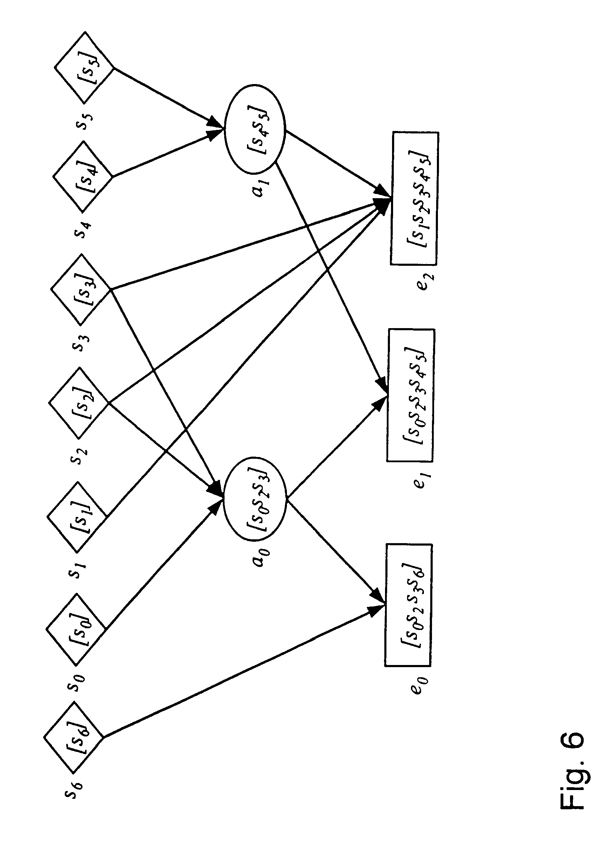

Bei gegebener Netzwerktopologie N und gegebenen nicht aggregierten Datenflüssen $e_i$ lässt sich jedoch auch ein Szenario an aggregierten Datenflüssen bilden, welches von dem in Fig. 4 dargestellten Szenario abweicht. Eine Änderung des Aggregationsszenarios bedingt jedoch gleichzeitig eine Änderung des Hierarchiegraphen H. So ist in Fig. 6 beispielhaft die LSP-Hierarchie dargestellt, welche sich ergibt, wenn die Datenflüsse gemäß Fig. 4 anders aggregiert werden.

Um einen Hierarchiegraphen H zu bilden, welcher beispielsweise im Hinblick auf die innerhalb des Netzwerks zu verwaltenden Zustandsinformationen optimiert ist, müssen angesichts der Vielzahl an Aggregationsalternativen Regeln für das Erstellen des Hierarchiegraphen H aufgestellt werden. Dies geschieht mittels graphentheoretischer Randbedingungen. Die graphentheoretische Formulierung der Randbedingungen gestattet ein einfaches Anfertigen und Verifizieren des Hierarchiegraphen H.

Eine erste Kategorie graphentheoretischer Randbedingungen lässt sich aus den aus der Datenflussaggregation als solcher resultierenden netzwerktechnischen Anforderungen ableiten:

- Die Netzwerksegmente s sind physikalische Verbindungen, welche Datenflüsse transportieren können. Die Netzwerksegmente s können daher Väter sein. Die Netzwerksegmente s sind jedoch keine Datenflüsse und können daher keine Söhne sein. Sie bilden folglich die Wurzeln in der LSP-Hierarchie.

- Die LSP sind aggregierte Datenflüsse a, welche über physikalische oder virtuelle Verbindungen fließen. Sie haben folglich Eltern und können keine Wurzeln sein. Sie sind virtuelle Verbindungen und können auch Väter sein.

- Nicht aggregierte Datenflüsse e können über physikalische oder virtuelle Verbindungen transportiert werden. Sie können jedoch nicht als Verbindungen fungieren und deshalb keine Väter sein. Sie sind folglich die Blätter des Hierarchiegraphen $H$.

- Ein Kreis im Hierarchiegraphen $H$ würde besagen, dass ein Datenfluss ein Vorfahre seiner selbst ist. Dies ist nicht möglich, da ein Datenfluss sich nicht selbst transportieren kann. Der Hierarchiegraph $H$ umfasst daher keine Kreise.

- Ein Datenfluss kann mehrere Eltern haben, wenn er über mehrere Verbindungen transportiert wird. Die Verbindungen haben jedoch keine gemeinsamen Netzwerksegmente. Es folgt:

$$a,c \in parents\ (b) \Rightarrow path\ (a) \cap path\ (c) = 0.$$

- Wenn a ein Vater von b ist, dann ist der Pfad von a ein Unterpfad von b *(path (a)* $\in$ *path (b))*. Es lässt sich mathematisch beweisen, dass die Umkehrung nicht gilt.

Weitere graphentheoretische Randbedingungen lassen sich aus den Eigenschaften der Datenflüsse innerhalb der speziellen LSP-Hierarchie ableiten:

- $H$ enthält keine Kreise. Aus diesem Grund kann der Operator *depth (f)* eines Flusses f innerhalb $H$ definiert werden. Wenn f ein Blatt ist, so gilt *depth (f)* = 0. Wenn f ein aggregierter Fluss ist, so gilt *depth (f)* = $max_{g \in sons(f)}$ *(depth (g)) + 1*.

- Ein Pfad ist ein geordneter Satz Netzwerksegmente. Kreise sind verboten, so dass die Ordnung unter den Netzwerksegmenten eines Wegs absolut und transitiv ist. Die Pfade von *fathers (f)* haben selbst paarweise eine leere Schnittmenge, d.h. sie überlappen nicht, aber sie überdecken den gesamten Pfad von f. Aus diesem Grund ist die Ordnung "<" auch bedeutsam für die Unterpfade innerhalb des Pfads von f. Die Beziehung "<" kann außerdem auf die Väter eines Datenflusses ausgeweitet werden. Es ist daher eine absolute Ordnung zwischen den Vätern eines Datenflusses gegeben. Bei der automatischen Erstellung von $H$ können diese Anforderungen berücksichtig werden.

Weitere graphentheoretische Randbedingungen können postuliert werden, um gezielt die Anzahl der in den Routern zu verwaltenden Zustandsinformationen zu verringern:

- Eine Aggregation ist nur dann sinnvoll, wenn zumindest n Datenflüsse aggregiert werden. Dies entspricht der graphentheoretischen Randbedingung, dass jeder aggregierter Fluss von $H$ zumindest n Söhne besitzen muss.

- Eine Aggregation ist nur dann sinnvoll, wenn sie zumindest 1 Verbindungen (Links) umfasst. Zweckmäßigerweise ist 1>1.

Eine LSP-Hierarchie kann über eine Menge von nicht aggregierten Datenflüssen einer Topologie gebildet werden, indem diese als Blätter in einen anfangs leeren Hierarchiegraphen $H$ eingefügt werden. Nach dem Einfügen aller Blätter muss jedes Blatt über seinen gesamten Pfad vollständig mit Vätern verknüpft werden. Diese Väter sind entweder Netzwerksegmente oder übergeordnete aggregierte Datenflüsse, die nach und nach durch besondere Einfüge-Strategien hinzu kommen.

Es sind verschiedene Einfüge-Strategien denkbar. In jedem Fall sollten aber für ein neues Blatt mittels geeigneter Suchverfahren potenzielle Väter gesucht werden, die schon in $H$ existieren. Die bereits bestehende Hierarchie muss für das Einfügen eines Blattes eventuell verändert werden, um den graphentheoretischen Randbedingungen zu genügen. Nachdem alle Blätter vollständig in $H$ eingefügt sind, kann dieser optimiert werden. Das geschieht z.B. durch Löschen, Aufspalten usw. derjenigen Knoten, welche den graphentheoretischen Randbedingungen nicht genügen.

Im folgenden werden verschiedene Suchverfahren vorgestellt. Allen gemeinsam ist, dass zu einem gegebenen Musterpfad p ein Knoten 1 $\in$ $H$ gesucht wird, der den Musterpfad p ganz oder teilweise enthält.

Die Suche startet immer bei den Netzwerkssegmenten s. Von einem Netzwerksegment s aus wird der Teilgraph *offspring (s)* durchsucht. Dieser enthält alle Knoten, die das Segment s besitzen. Nur so kann jeder Knoten 1, der das Segment s enthält, mit Sicherheit aufgefunden werden. Die Suche von den Netzwerksegmenten aus ist notwendig, da nach einer graphentheoretischen Randbedingung nicht jeder Knoten g, der das Segment s in seinem Pfad besitzt, mit dem Knoten 1 mittels einer Transportbeziehung verbunden sein muss.

Die nachfolgend beispielhaft erläuterten Suchverfahren unterscheiden sich hauptsächlich in der Art, wie sich der Pfad des gefundenen Knotens 1 zum Musterpfad p bezüglich des Enthaltenseins verhält.

Gemäß einem ersten Verfahren wird die Suche mit einem vorgegebenen Segment s aus dem Musterpfad p gestartet. Der Ergebnisknoten muss dieses Segment s enthalten und soll zusätzlich einen maximalen Teilpfad von p besitzen. Gemäß einem zweiten abgewandelten Verfahren kommt hinzu, dass der Pfad des Ergebnisknotens im Musterpfad enthalten sein muss *(path(1)⊆p)*. Gemäß einem dritten, abgewandelten Verfahren wird nach demjenigen Knoten gesucht, der einen längsten Teilpfad aus dem Musterpfad p enthält. Ein viertes, abgewandeltes Verfahren arbeitet analog wie das dritte, jedoch muss der Ergebnisknoten wie bereits beim zweiten Verfahren im Musterpfad enthalten sein. Die Verfahren lauten also:

1. Suche nach maximalem Teilpfad mit Segment s,
2. Suche nach maximalem und enthaltenem Teilpfad mit Segment s,
3. Suche nach maximalem Teilpfad,
4. Suche nach maximalem und enthaltenem Teilpfad.

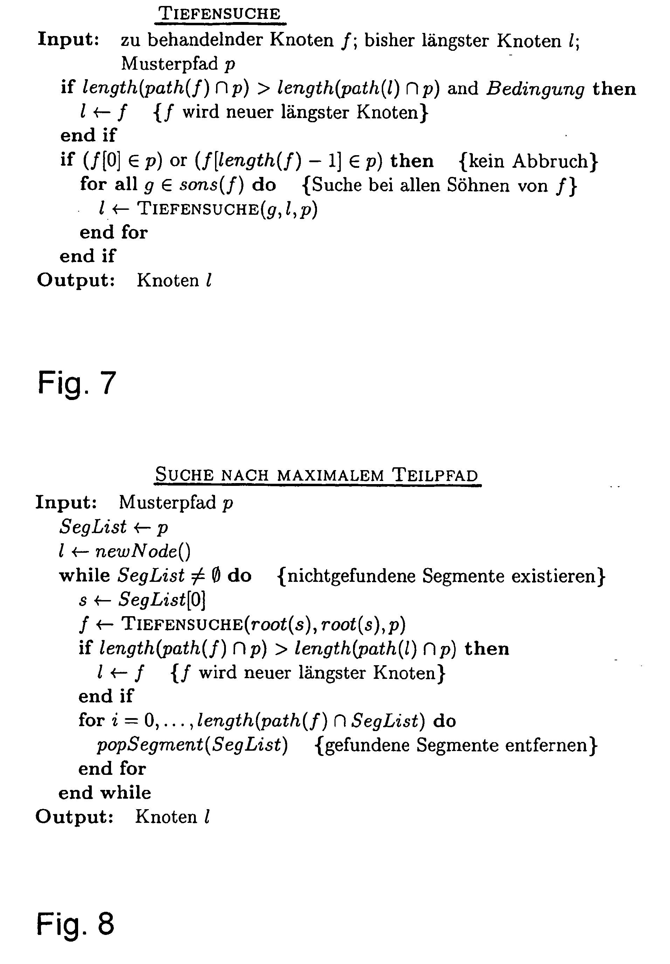

Es wird jetzt beispielhaft das erste Verfahren näher beschrieben. Im Rahmen des ersten Verfahrens wird ein Knoten $1 \in H$ mit einem maximalen Teilpfad aus dem Musterpfad p gesucht, der ein bestimmtes Segment $s \in p$ enthält. Der Schnitt *(path(1) $\cap$ p)* ist maximal für alle Knoten $1 \in H$ und es gilt $s \in 1$. Die Suche kann auf die Menge *offspring (s)* beschränkt werden. Diese Knotenmenge entspricht dem Baum, der s als Wurzel hat. Das Suchverfahren nach dem Knoten 1 im Graphen verläuft als Tiefensuche in einem Baum und ist in Fig. 7 skizziert.

Als Startknoten f für die Suche wird das Segment s verwendet. Der Knoten 1, der während des Suchdurchgangs stets der Knoten mit dem bisher längsten Teilpfad ist, wird am Ende als Suchergebnis zurückgegeben. Zu Beginn gilt 1 = s. Gelangt die Tiefensuche zu einem Knoten f, der einen längeren Schnitt mit dem Musterpfad besitzt als der Knoten 1, so wird dieser Knoten f als potenzielles Suchergebnis übernommen (l ← f). Für alle Söhne $g \in$ *fathers (f)* wird eine weitere Tiefensuche gestartet. Hat ein Knoten f keine Söhne, so ist f ein Blatt und die Suche terminiert für diesen Zweig des Baumes *offspring (e)*.

Das Absteigen der Suche zu den Söhnen von f hat nur dann Sinn, wenn dabei längere Teilpfade von p gefunden werden können. Dies ist genau dann der Fall, wenn mindestens eines der beiden Randsegmente von f in p enthalten ist. Ansonsten können in diesem Zweig des Baumes keine längeren Teilpfade gefunden werden, da der Pfad von f im gesamten Teilgraphen *offspring (f)* enthalten ist.

Bei der Suche nach dem Knoten 1 gemäß dem ersten Suchverfahren mit dem maximalen Teilpfad aus p wird keine weitere Bedingung benötigt. Die in Fig. 7 erwähnte Bedingung kann also durch true ersetzt werden bzw. wegfallen. Bei dem vorstehend erwähnten zweiten Suchverfahren muss der Pfad des Ergebnisknotens im Musterpfad enthalten sein. Die in Fig. 7 erwähnte Bedingung ist daher durch path (e) $\subseteq$ p zu ersetzen. Das dritte (Fig. 8) und das vierte Suchverfahren lassen sich ebenfalls auf der Grundlage des Tiefensuchverfahrens gemäß Fig. 7 implementieren.

Beim Einfügen von Knoten in $H$ kann es bei der Verknüpfung mit Vaterknoten zu Widersprüchen mit den graphentheoretischen Randbedingungen kommen. Es müssen nämlich alle Paare von Vätern eines Knotens einen leeren Schnitt haben. Existiert ein nichtleerer Schnitt zwischen zwei Vätern eines Knotens, so wird dies als Konflikt bezeichnet.

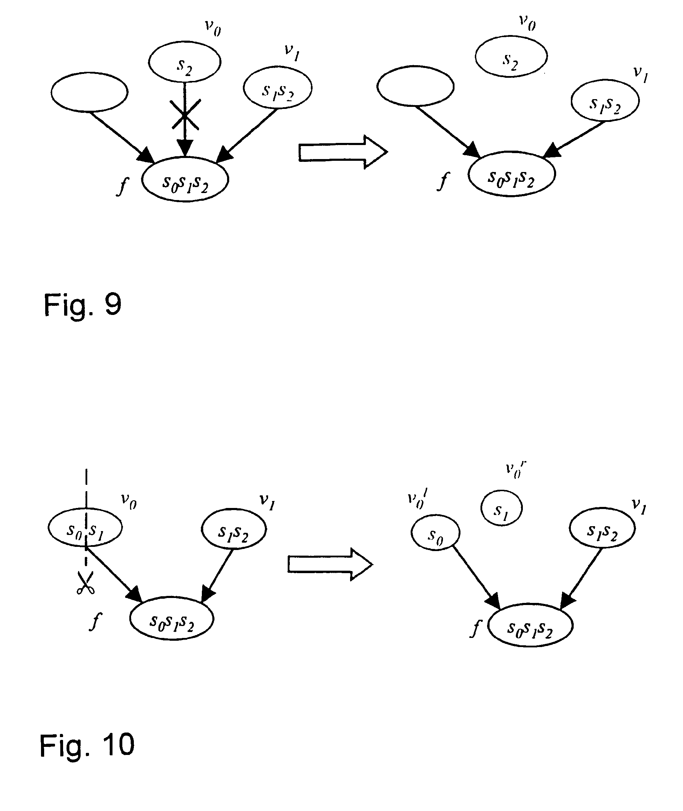

Je nach Art des Konflikts kann dieser auf unterschiedliche Weise behoben werden. So kann es beispielsweise, wie in Fig. 9 dargestellt, genügen, den Pfeil eines der beiden Konfliktväter $v_0$, $v_1$ zum Konfliktsohn f zu löschen. Wie Fig. 9 entnommen werden kann ist dann lediglich noch $v_1$ Vater des Konfliktsohns f und der Konflikt damit aufgehoben. Kann keiner der beiden Konfliktväter $v_0$, $v_1$ ersatzlos vom Konfliktsohn f getrennt werden, muss einer der Konfliktväter $v_0$ in zwei Teilknoten aufgespalten werden. Dieser Sachverhalt ist in Fig. 10 dargestellt. Erforderlichenfalls können auch komplexere Konfliktbehebungsmechanismen implementiert werden.

Das Einfügen eines neuen Knotens f in $H$ geschieht durch Verbinden des Knotens f mit bereits vorhandenen Knoten. Der Pfad dieser bereits vorhandenen Knoten, die dann Vaterknoten von f werden, muss stets im Pfad von f enthalten sein. Es müssen also zuerst mögliche Vaterknoten von f in $H$ gesucht werden. Dies geschieht z.B. mittels der oben erwähnten Suchverfahren. Der Knoten f wird dann gemäß den graphentheoretischen Randbedingungen solange mit Knoten in $H$ verbunden, bis jedem Segment von *path (f)* ein Vaterknoten konfliktfrei zugeordnet ist.

Für das Einfügen eines neuen Knotens f gibt es verschiedene Strategien. Sie unterscheiden sich in der Art des Suchverfahrens, das dabei Verwendung findet, sowie in der Reihenfolge, in der die einzelnen Segmente oder Teilpfade angehängt werden.

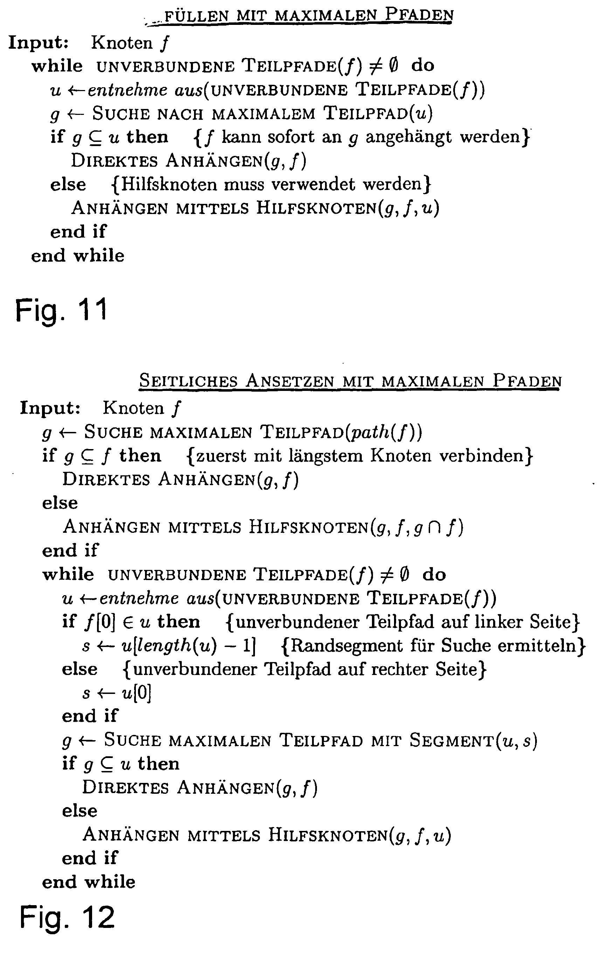

Eine erste Einfügestrategie wird "Auffüllen mit maximalen Pfaden" genannt. Ein Knoten f soll in den Graphen $H$ eingefügt werden. Beim Auffüllen mit maximalen Pfade wird für alle noch unverbundenen Teilpfade von *path (f)* das bereits beschriebene Verfahren der Suche nach längstem Teilpfad im Graphen gestartet (Fig. 11).

Solange die Menge $V$ der unverbundenen Teilpfade von f nicht leer ist, wird beim Auffüllen mit maximalen Pfaden ein beliebiger unverbundener Teilpfad u aus *V* entnommen. Für diesen Pfad u wird eine neue Suche nach längstem Teilpfad im Graphen gestartet. Mit dem gefundenen Knoten g soll f verknüpft werden.

Wenn der Pfad von g in u (und damit auch in f) enthalten ist, so werden g und f direkt miteinander verbunden.

Eine zweite Einfügestrategie wird "seitliches Ansetzen mit maximalen Pfaden" genannt. Eine mathematische Formulierung des diesbezüglichen Verfahrensablaufs ist in Fig. 12 dargestellt.

Beim seitlichen Ansetzen mit maximalen Pfaden wird ein bereits verbundener Pfadbereich eines einzufügenden Knotens f durch das seitliche Ansetzen sukzessiv vergrößert. Dabei wird jeweils nach maximalen Teilpfaden mit Segment s gesucht. Konflikte mit bereits verbundenen Vätern sollen wie beim Auffüllen mit maximalen Pfaden nicht entstehen können.

Zunächst wird für einen einzufügenden Knoten f eine Suche nach dem Knoten mit längstem Teilpfad aus f gestartet. Mit dem Ergebnisknoten g wird f als erstes verbunden. Anschließend wird die Menge der unverbundenen Teilpfade *V* von f ermittelt. Diese besteht nun aus dem linken und dem rechten noch unverbundenen Teilpfad von f. Für jeden dieser beiden Teilpfade u ∈ *V* wird wie folgt vorgegangen:

Es wird zuerst das Randsegment s des Pfades u ermittelt, welches direkt an den bereits verbundenen Pfadbereich von f angrenzt. Mit diesem Segment s wird eine Suche nach maximalem Teilpfad mit Segment s durchgeführt. Als Musterpfad wird nur der unverbundene Teilpfad u übergeben. Das Resultat der Suche ist ein Knoten g. Je nachdem ob von g in u enthalten ist, muss nun das Anhängen direkt oder mittels Hilfsknoten erfolgen.

Eine dritte Einfügestrategie wird "Auffüllen mit maximalen enthaltenen Pfaden" bezeichnet. Diese Einfügestrategie entspricht der in Fig. 11 dargestellten Einfügestrategie, jedoch wird anstatt des Suchverfahrens "Suche nach längstem Teilpfad" das bereits erläuterte Suchverfahren "Suche nach maximalem und enthaltenem Teilpfad" verwendet. Damit ist gewährleistet, dass der Pfad von g stets in u enthalten ist. Es kann daher auch stets ein direktes Anhängen stattfinden.

Eine vierte Einfügestrategie ist das "seitliche Ansetzen mit maximalen enthaltenen Pfaden". Diese Einfügestrategie ist eine Erweiterung der bereits erläuterten Einfügestrategie "seitliches Ansetzen mit maximalen Pfaden". Das Verfahren läuft analog zu dem in Fig. 12 erläuterten Verfahren ab, allerdings findet ein anderes Suchverfahren Verwendung. Für die erste Verbindung eines einzufügenden Blattes f kommt das bereit erläuterte Suchverfahren "Suche nach maximalem enthaltenen Teilpfad" zum Einsatz. Anschließend werden sukzessiv Knoten gesucht, die bündig an den bereits verbundenen Teilpfad von f anstoßen. Dies kann mittels des Suchverfahrens "Suche nach maximalen enthaltenen Teilpfaden mit Segment s" geschehen, wenn für s wieder jeweils die Randsegmente von u genommen werden. Als Anhängeverfahren kann wiederum ausschließlich das direkte Anhängen verwendet werden, da keine Konflikte zu befürchten sind.

Mittels der vorstehend beschriebenen Einfügestrategien lassen sich Hierarchiegraphen *H* erstellen, welche diejenigen graphentheoretischen Randbedingungen erfüllen, die aus der Datenflussaggregation innerhalb des Netzwerks und den Eigenschaften der Datenflüsse gemäß der LSP-Hierarchie abgeleitet wurden.

Gemäß den weiteren graphentheoretischen Randbedingungen zur Minimierung der zu verwaltenden Zustandsinformation sollen aber keine Aggregatsknoten existieren, die paarweise einen identischen Pfad haben, die eine Mindestanzahl von Söhnen unterschreitet oder deren Pfad kürzer ist als eine vorgegebene Mindestlänge. Während des Erstellens von *H* unter Verwendung der vorstehend beschriebenen Einfügestrategien sind solche Knoten aber notwendig, da sie das Anhängen der neu einzufügenden Blätter ermöglichen. *H* wird deshalb erst nach dem Einfügen aller Blätter bereinigt, in dem alle Aggregatsknoten, die diesen graphentheoretischen Randbedingungen widersprechen, gelöscht und deren Pfeile umgehängt werden.

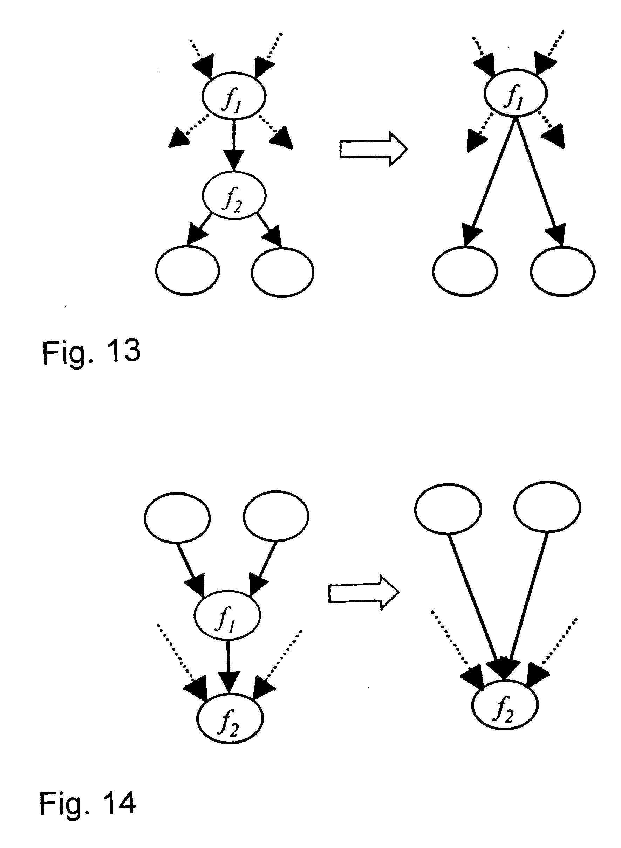

Das Löschen eines Aggregatknotens f ist beispielsweise dann erforderlich, wenn der Aggregatsknoten f nur einen einzigen Vaterknoten besitzt. Dieser Sachverhalt ist in Fig. 13 dargestellt. Außerdem muss ein Aggregatsknoten f gelöscht werden, wenn die vorgegebenen Mindestanzahl von Söhnen unterschritten wird (Fig. 14).

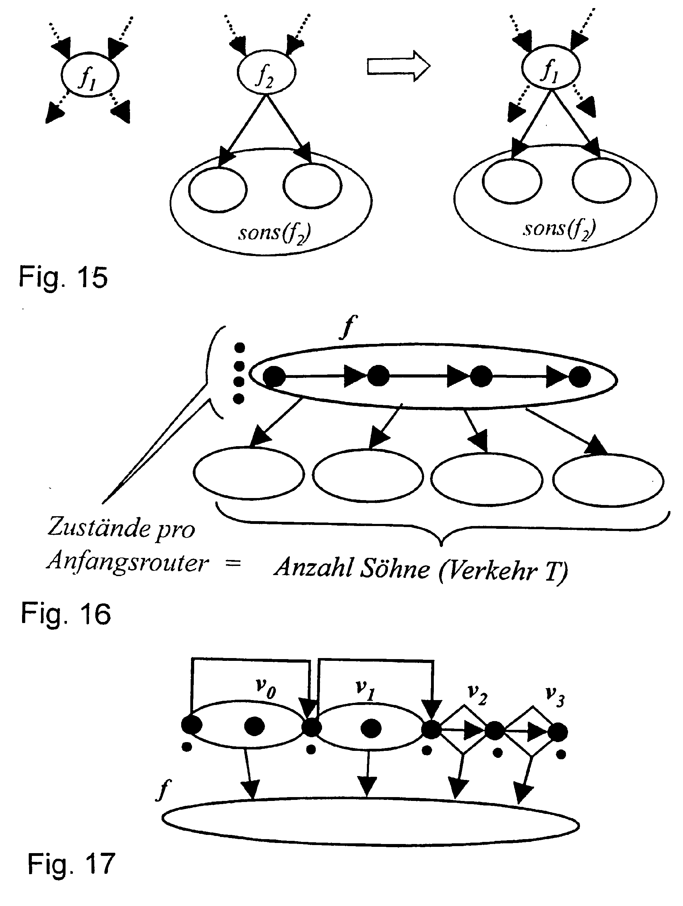

Ein Löschen von Knoten kann auch dann erforderlich sein, wenn zwei Knoten $f_1$ und $f_2$ mit identischem Pfad in verschiedenen Teilgraphen von *H* existieren. In diesem Fall erhält einer der Knoten $f_1$ alle Söhne des Knotens $f_2$. Der Knoten $f_2$ ist dann überflüssig und kann von allen seinen Verbindungen gelöst und anschließend aus dem Graphen gelöscht werden. Dies ist in Fig. 15 graphisch wiedergegeben.

Durch das Bilden von ein- und mehrfach aggregierten Datenflüssen können die abzuspeichernden Zustandsinformationen in den Routern der Netzwerk-Topologie verringert werden. Diese Verringerung der Speicher- und Prozessor-Auslastung ist das Ziel der Hierarchie-Bildung und wird im folgenden kurz mit Zustands-Reduzierung bezeichnet.

Die Zustands-Reduzierung kann nach dem Einfügen aller Knoten in den Hierarchiegraphen berechnet werden (globale Bewertung). Sie stellt die Qualität einer gesamten Hierarchie dar. Oftmals benötigt man aber bereits während des Erstellens des Hierarchiegraphens ein Kriterium, um z.B. zu entscheiden, welches von zwei Aggregaten (Knoten) gespalten werden soll (lokale Bewertung). Diese Entscheidung sollte so getroffen werden, dass damit die Zustands-Reduzierung maximiert wird. Es ist deshalb für ein einzelnes Flussaggregat eine lokale Bewertung aus der gegebenen Menge von Transportflüssen zu berechnen.

Eine lokale Bewertung eines Aggregates f könnte anhand der maximalen Verkehrsmenge, die über den Pfad *path (f)* potenziell fließen kann, erfolgen. Dies ist rechnerisch sehr aufwendig. Es wird daher die minimale Anzahl von Flüssen, die auf den Segmenten dieses Pfades f fließen, als Indiz für die maximale Verkehrsmenge verwendet. Zu diesem Zweck wird zunächst aus einer Pfade-Matrix und aus einer Verkehrs-Matrix eine Liste "Segmentverkehr" erstellt. Diese Liste ordnet jedem Segment s der Topologie ihren Gesamtverkehr m(s) zu, d.h. die Anzahl der Flüsse, die über das Segment s fließen.

Der Verkehr t (p), der über den Pfad p = $s_0$, ... , $s_{n-1}$ fließt, ist somit nach oben beschränkt durch das Segment mit dem geringsten Verkehr. Es gilt:

$$t(p) \leq min_{0 \leq i < n}(m(s_i))$$

Mit Hilfe der lokalen Bewertung kann eine Entscheidungsfunktion E abschätzen, über welchen von zwei Pfaden der größere potenzielle Verkehr t fließt. Daraus kann wiederum eine Annahme getroffen werden, durch welchen der beiden Flüsse $f_0$ und $f_1$ die geringere Zustands-Reduzierung zu erwarten ist. Diesen Fluss soll die Entscheidungsfunktion $E(f_0, f_1)$ zurückgegeben. Es gilt:

$$E(f0, f1) = \begin{cases} f_0 : t(path(f_0)) < t(path(f_1)) \\ f_1 : sonst \end{cases}$$

Mittels der Entscheidungsfunktion kann lokal entschieden werden, welcher der Konfliktknoten $f_0$ oder $f_1$ behandelt werden soll.

Eine globale Bewertung der gesamten Hierarchie basiert auf der Zustands-Reduzierung durch die Gesamtheit aller nicht aggregierten und aggregierten Flüsse. Es muss also die Verringerung der abzuspeichernden Zustände gemessen werden oder die Anzahl der Restzustände, die nach dem Bilden einer Hierarchie für eine gegebene Topologie noch anfallen. Zu diesem Zweck werden für alle Router der Topologie die Zustände gezählt. Der Quotient aus der Anzahl aller im Netz zu speichernden Zustände mit und ohne Hierarchie ist dann ein Kriterium für die Güte der jeweiligen Hierarchie. Dieser Quotient kann auch als der verbleibende Anteil von Restzuständen nach Hierarchie-Bildung in Prozent verstanden werden. Ein Quotient mit dem Wert 0,5 für eine Hierarchie bedeutet z.B. dass unter Verwendung dieser Hierarchie im gesamten Netzwerk nur halb so viele Zustände wie zuvor bzw. nur noch 50 % der Zustände gespeichert werden müssen.

Die Zustände werden für jeden Router einzeln gezählt. Damit kann sowohl die maximale Anzahl von Zuständen pro Router als auch die Gesamtzahl der Zustände innerhalb des Netzwerks berechnet werden. Außerdem soll unterschieden werden, ob ein Zustand durch die Versorgung eines Flusses mit RSVP QoS entsteht (RSVP-Zustandsinformationen) oder ob Zustände aufgrund der Verwendung von MPLS anfallen (MPLS-Zustandsinformationen). Aus diesem Grund muss eine Kostenfunktion gefunden werden, welche es ermöglicht, die RSVP- und MPLS-Zustandsinformationen des LSP-Hiererchiegraphen getrennt zu zählen.

Zunächst werden die RSVP-Zustandsinformationen betrachtet. Wenn für IP-Pakete, die über einen Link gesendet werden, RSVP QoS gewährleistet werden soll, müssen die IP-Pakete im Anfangsrouter erkannt und dem Paket-Scheduler als bevorzugt weitergereicht werden. Um diese bevorzugte Behandlung zu ermöglichen, müssen für jeden QoS-Fluss Informationen in der MIB des Anfangsrouter eines Links verwaltet werden.

Um ein Maß für die Verwaltungsmenge pro Router zu bekommen, wird für jeden Anfangsrouter eines Links f pro Fluss, der ihn benutzt, ein Aufwands- oder Kostenpunkt (= Zustand) vergeben. Diese Menge ist genau *sons (f)*. Dadurch kann sowohl die Gesamtmenge der Zustandsinformationen im Netzwerk berechnet werden als auch die maximale Zustandsinformation pro Router. Ein Blatt z.B. ist ein Aggregat von N Transportflüssen. Somit erzeugt ein Blatt N Aufwandspunkte in seinem Anfangsrouter. Ein Beispiel hierzu ist in Fig. 16 abgebildet.

Als nächstes werden die MPLS-Zustandsinformationen betrachtet. MPLS erzeugt ebenfalls Zustände in allen Routern eines Aggregats, die das jeweilige Label sehen. Das sind diejenigen Router, die ein neues Label vergeben, diejenigen, die das Label wechseln und auch diejenigen, die es am Ende herunternehmen.

Um diesen Aufwand abzuschätzen wird für jedes MPLS-Aggregat in H den Anfangsroutern aller seiner Links *(fathers(f))* ein Aufwands- oder Kostenpunkt vergeben: Dem ersten für die Labelvergabe, allen weiteren für Label-Swapping. Schließlich wird noch ein Kostenpunkt für den Endrouter des letzten Vaters eines Aggregats vergeben.

Hier wird stets von den Aggregaten ausgegangen. Dabei werden die transportierenden Router betrachtet und somit die Vatermenge statt der Sohnmenge. Deswegen ist es für die MPLS-Aufwandszählung eines Blattes egal, wie viel Verkehr es repräsentiert. Ein Beispiel dazu ist in Fig. 17 dargestellt.

Bislang wurde erläutert, wie ausgehend von einer gegebenen Netzwerktopologie und einer bestehenden Datenflussmatrix der Hierarchiegraph *H* erstellt und bewertet werden kann. Nachfolgend wird anhand einiger praktischer Ergebnisse aufgezeigt, welche Einsparungen an Zustandsinformationen durch MPLS-Aggregierung und geschickte LSP-Hierarchiebildung erreicht werden können.

Im Rahmen einer ersten Auswertung wurde zunächst eine zufallsgesteuert erzeugte Topologie in Gestalt eines spannenden Baumes mit einer vorgegebenen Anzahl von N Netzwerkknoten erzeugt. Auf der gewonnenen Topologie werden anschließend zufallsgesteuert Mengen von Datenflüssen definiert.

Unabhängig davon, ob die Topologie und die darauf fließenden Datenflüsse vorgegeben oder zufallsgesteuert erzeugt werden, müssen aus diesen Eingaben die Knoten für *H* gebildet werden. Die gegebenen Pfade und Verkehrsmengen befinden sich in beiden Fällen in einer N x N - Pfade- bzw. Verkehrs-Matrix. Die Pfade-Matrix sowie die Verkehrs-Matrix haben in der Hauptdiagonalen jeweils keinen Eintrag, da ein Fluss nur zwischen zwei verschiedenen Rechnern definiert ist. Folglich können maximal N x (N-1) Knoten mit verschiedenen Pfaden als Eingabe (Blätter) für *H* erstellt werden.

Aus Effizienzgründen wird für T Transportflüsse zwischen zwei Rechnern A und B des Netzwerkes nur ein Knoten in *H* eingefügt. Dieser Knoten stellt dann ein Aggregat mit genau diesen Flüssen dar, welches durch die Einfüge-Methoden nicht mehr verändert wird. Um die Menge des Verkehrs für spätere Bewertungen benutzen zu können, wird in diesem Aggregatsknoten ein Verkehrswert der Größe T abgespeichert.

Beim Einfügen von Knoten, welche Flüsse bzw. Aggregate von Flüssen repräsentieren, ist deren Reihenfolge von Bedeutung. Deshalb werden für die Tests folgende Einfüge-Reihenfolgen verwendet:

1. *longestFirst* - zuerst werden die Knoten mit den jeweils längsten Pfaden eingefügt. Knoten mit Pfaden gleicher Länge werden in zufälliger Reihenfolge eingefügt.

2. *thinnestFirst* - zuerst werden die Knoten, über deren Pfad jeweils der geringste Verkehr fließt, eingefügt. Knoten mit gleichem Verkehrsaufkommen werden wieder zufällig gewählt.

3. *random* - die Reihenfolge ist zufällig gewählt.

4. *shortestFirst* - zuerst werden die Knoten mit den jeweils kürzesten Pfaden eingefügt.

5. *thickestFirst* - zuerst werden die Knoten, über deren Pfad jeweils der meiste Verkehr fließt, eingefügt.

Für die Einfüge-Reihenfolgen 2 und 5 muss zunächst für jeden Pfad der darüber fließende Verkehr ermittelt werden. Wenn p die Anzahl aller Pfade ist, so kann dies in

$$\frac{p(p-1)}{2}$$

Vergleichen erfolgen. Die Anzahl p ist nach oben durch $p \leq N \times (N-1)$ beschränkt, wobei N die Zahl der Rechner im Netzwerk ist. Der Aufwand liegt somit in der Größenordnung $N^4$.

Um aus den verschiedenen Einfüge-Strategien zum Bilden eines LSP-Hierarchiegraphen eine optimale Strategie zu finden, werden zunächst nur die Einsparungen an MPLS-Zuständen M betrachtet.

Eine optimale Strategie ist jene, bei der durch die Hierarchie-Bildung die maximale Anzahl der MPLS-Zustände $M_i$ pro Router $r_i$ im gesamten Netzwerk minimal wird. Daraus folgt, dass auch der Anteil der Restzustände $RZ_M$ minimal wird. Dieser kann durch den Quotienten aus den maximalen MPLS-Zuständen pro Router mit ($M^2$) und ohne ($M^1$) Hierarchie berechnet werden. Es gilt:

$$RZ_M = \frac{\max_{0 \leq i < N}(M_i^2)}{\max_{0 \leq i < N}(M_i^1)}$$

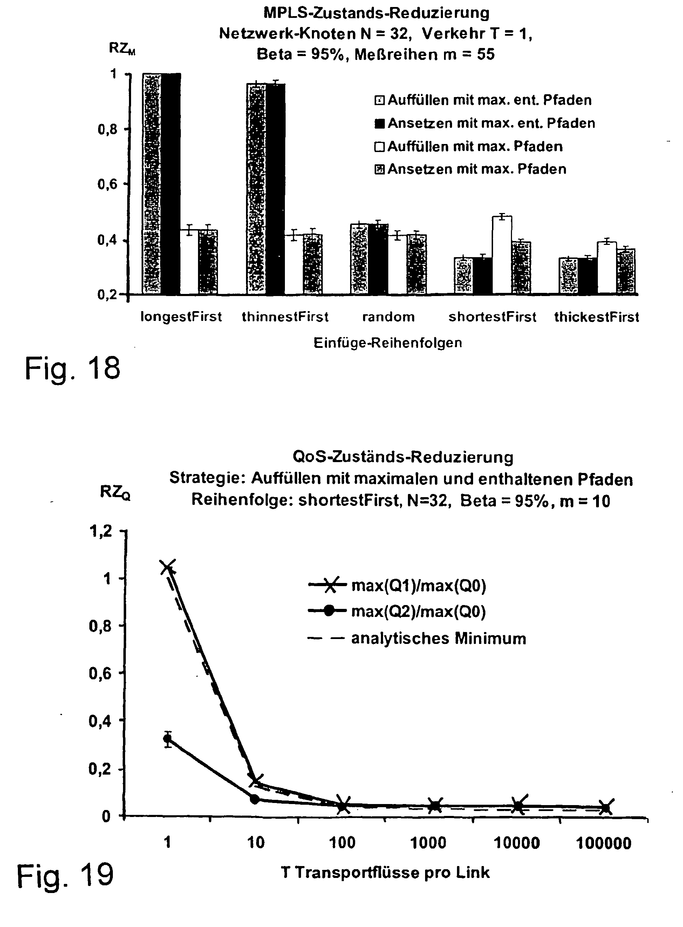

Diese Betrachtung ist unabhängig von dem Verkehr T, der in den Blättern des Hierarchie-Graphen gebündelt ist. Die Testläufe wurden deshalb mit konstantem T = 1 für ein Netzwerk mit N = 32 Netzwerk-Knoten durchgeführt. Für jede zufällig erzeugt Topologie wurden 20 Hierarchien berechnet, nämlich für alle Kombinationsmöglichkeiten aus den vier Einfüge-Strategien und den fünf Einfüge-Reihenfolgen. Es wurden insgesamt m = 55 Messreihen durchgeführt, also 55 Topologien erzeugt. Für alle Topologien wurde der Quotient $RZ_M$ berechnet und davon der Mittelwert über die gesamte Messreihe gebildet. Die Ergebnisse dazu sind im Diagramm von Fig. 18 zu sehen. Zu den Mittelwerten wurden Konfidenzintervalle berechnet. Diese sind in der Abbildung durch die doppel-T-förmigen Intervalle dargestellt. Die statistische Sicherheit β betrug jeweils 95 %.

Wie sich aus Fig. 18 ergibt, werden die besten Ergebnisse bei der Reihenfolge *shortestFirst* mit den Strategien "Auffüllen bzw. Ansetzen mit maximalen und enthaltenen Pfaden" erreicht. Die Voraussetzung hierfür ist aber eine Sortierung aller einzufügenden Flüsse nach ihrer Pfadlänge. Das ist nur möglich, wenn zu Beginn der Hierarchie-Bildung alle einzufügenden Flüsse bereits bekannt sind.

Wenn dagegen Flüsse in eine bereits bestehende Hierarchie eingefügt werden sollen, so ist keine sortierte Einfüge-Reihenfolge gegeben. Es müssen daher die Ergebnisse der Reihenfolge *random* betrachtet werden. Hier sind die Strategien "Auffüllen bzw. Ansetzen mit maximalen Pfaden" am besten geeignet.

Es wurde außerdem untersucht, wie sich Aggregierung und graphentheoretische Hierarchie-Bildung auf die Reduzierung der QoS-Zustände a in den Routern auswirken. In den Tests wurde an Stelle von T Transportflüssen mit identischen Start- und Zielrechnern stets nur ein Blatt in den Hierarchie-Graphen eingefügt. Dieses Blatt repräsentierte somit ein MPLS-Aggregat, in dem diese T Transportflüsse gebündelt waren.

Die Tests wurden mit einem Netzwerk mit N = 32 Routern, der Einfüge-Reihenfolge *shortestFirst* und der Strategie "Auffüllen mit maximalen und enthaltenen Pfaden" durchgeführt. Das Verkehrsaufkommen wurde variabel von T = 1, 10, ... , 100000 gewählt. Es haben m = 10 Durchgänge stattgefunden. Gemessen wurde dabei die maximale Anzahl der QoS-Zustände Q in den Routern:

- ohne Aggregierungen: $\max_{0 \leq i < N}(Q_i^o)$

- mit einmaliger Aggregierung: $\max_{0 \leq i < N}(Q_i^1)$

- mit graphentheoretisch erstellter LSP-Hierarchie: $\max_{0 \leq i < N}(Q_i^2)$.

Wie sich aus Fig. 19 ergibt, wird die Reduzierung der QoS-Zustände Q hauptsächlich durch die einfache Bündelung der Transportflüsse zu MPLS-Aggregaten erreicht. Es existieren dabei maximal N x (N-1) MPLS-Aggregate f, die jeweils *length (f)* + 1 MPLS-Zustände erzeugen. Bei der einfachen Aggregierung darf es deshalb nicht belassen werden, da die Anzahl von MPLS-Zuständen nicht mit der Größe des Netzwerks skaliert. Es läßt sich also festhalten, dass die Anzahl der maximalen QoS-Zustände pro Router, und damit auch die Summe aller QoS-Zustände, bei zunehmendem Verkehrsaufkommen skaliert, wenn eine einfache Bündelung der Transportflüsse durch MPLS-Aggregate stattfindet. Hierfür ist (noch) keine Hierarchiebildung notwendig. Jedoch erzeugen diese MPLS-Aggregate wiederum MPLS-Zustände in den Routern. Diese MPLS-Zustände müssen durch Hierarchie-Bildung reduziert werden.

Abschließend wurde die Hierarchie-Bildung an einem realen Netzwerk getestet. Dazu wurde das bekannte AT&T-Netzwerk mit 25 Backbone- und Gateway-Knoten mit gerouteten Pfaden und dem darauf fließenden Verkehr untersucht.

Nach Erstellen und Bewerten des Hierarchiegraphen ergaben sich für die maximalen QoS-Zustände pro Router eine Reduzierung auf $RZ_Q \approx$ 17 % und für die maximalen MPLS-Zustände pro Router eine Reduzierung auf $RZ_M \approx$ 76 %. Diese Ergebnisse wurden mit den Strategien "Auffüllen bzw. Ansetzen mit maximalen und enthaltenen Pfaden" bei den Reihenfolgen *shortestFirst* und *thickestFirst* erreicht.

Diese etwas höheren Werte als bei den übrigen Tests lassen sich durch die spezielle Architektur des AT&T-Netzes erklären. Bei den zufälligen Topologien handelte es sich stets um einen spannenden Baum. Daraus ergaben sich viele gemeinsame Teilpfade bei verschiedenen Verbindungen. Die AT&T Topologie dagegen ist nicht kreisfrei und es existieren zwischen zwei Routern im Netz oft verschiedene mögliche Pfade. Folglich ergeben sich weniger gemeinsame Pfade, so dass sich weniger Hierarchien aufbauen lassen.

Zum Vergleich wurde ein Test mit einer zufällig erzeugten Topologie mit ebenfalls 25 Netzwerk-Knoten und gleichem Verkehrsaufkommen wie bei AT&T durchgeführt. Hierbei ergaben sich eine QoS-Zustands-Reduzierung auf $RZ_Q \approx$ 6 % und eine MPLS-Zustands-Reduzierung auf $RZ_M \approx$ 40 %.

Wie sich aus den durchgeführten Testreihen ergibt, kann die Anzahl der MPLS-Aggregate, die in einem Router verwaltet werden müssen, durch geschickte LSP-Hierarchiebildung unter Verwendung graphentheoretischer Randbedingungen deutlich reduziert werden. Verschiedene Verfahren zur Erstellung von Hierarchiegraphen unter Verwendung graphentheoretischer Randbedingungen wurden erläutert. Weitere Verfahren können ebenfalls zum Einsatz gelangen. Es wurde aufgezeigt, dass kein Hierarchiebildungsverfahren existiert, welches für alle Netzwerkstrukturen gleichermaßen geeignet ist. In der Praxis sollte daher parallel mit unterschiedlichen Hierarchiebildungsverfahren gearbeitet werden.

Ein Netzwerk gemäß des Hierarchiegraphen zu konfigurieren heisst die Vater-Sohn-Transportbeziehungen in den Transportknoten umzusetzen. Dies geschieht am einfachsten und sichersten, wenn alle physikalischen und virtuellen Verbindungen, die benutzt werden, schon vorhanden sind, d.h., wenn keine Forwärtsreferenzen auf zukünftig einzurichtende Verbindungen benötigt werden. Der Hierarchiegraph ist kreisfrei, deswegen kann er topologisch sortiert werden. Dabei werden die Knoten des Graphen in einer solchen Reihenfolge ausgegeben, dass sich jeder Vater vor jedem seiner Söhne befindet. Dann werden die Vater-Sohn-Transportbeziehungen in der Reihenfolge im Netzwerk konfiguriert, in der die Söhne in der topologischen Sortierung vorkommen. So können Forwärtsreferenzen vermieden werden.

## Patentansprüche

1.  Verfahren zum computergestützten Ermitteln einer virtuellen Hierarchie von mittels Tunnels mehrfach aggregierten Datenflüssen in einem Netzwerk, enthaltend:

    - Bereitstellen einer Netzwerktopologie ($N$) und von Informationen betreffend die Datenflüsse ($E$) innerhalb des Netzwerks;
    - Bereitstellen von aus netzwerktechnischen Anforderungen abgeleiteten, graphentheoretischen Randbedingungen; und
    - Erstellen eines Hierarchiegraphen ($H$) auf der Grundlage der Netzwerktopologie ($N$) und der Informationen betreffend die Datenflüsse ($E$) innerhalb des Netzwerks unter Berücksichtigung der graphentheoretischen Randbedingungen,
    wobei
    - der Hierarchiegraph ($H$) unter dem Gesichtspunkt einer Minimierung von innerhalb des Netzwerks oder eines Teils des Netzwerks zu verwaltenden Zustandsinformationen erstellt wird.

2.  Verfahren nach Anspruch 1 weiter enthaltend:

    - Bewerten des Hierarchiegraphen ($H$) im Hinblick auf die Zustandsinformationen, welche innerhalb des Netzwerks oder eines Teiles des Netzwerks für die Realisierung der dem Hierarchiegraphen ($H$) entsprechenden Netzwerkkonfiguration zu verwalten sind.

3.  Verfahren nach einem der Ansprüche 1 und 2,
    **dadurch gekennzeichnet, dass** zum Erstellen des Hierarchiegraphen ($H$) graphentheoretische Operatoren verwendet werden.

4.  Verfahren nach einem der Ansprüche 1 bis 3, weiter enthaltend Konfigurieren des Netzwerks gemäß dem erstellten Hierarchiegraphen ($H$).

5.  Verfahren nach einem der Ansprüche 1 bis 4,
    **dadurch gekennzeichnet, dass** der Hierarchiegraph ($H$) Knoten ($F$) und Transportbeziehungen ($T$) zwischen den Knoten ($F$) umfasst.

6.  Verfahren nach Anspruch 5,
    **dadurch gekennzeichnet, dass** die Transportbeziehungen ($T$) Richtungsinformationen enthalten.

7.  Verfahren nach Anspruch 5 oder 6,
    **dadurch gekennzeichnet, dass** die Transportbeziehungen ($T$) eine Vater-Sohn-Beziehung innerhalb der Hierarchie der Knoten ($F$) kenntlich machen.

8.  Verfahren nach einem der Ansprüche 6 und 7,
    **dadurch gekennzeichnet, dass** die Knoten ($F$) zumindest physikalische Netzwerkverbindungen ($S$), ein- oder mehrfach aggregierte Datenflüsse ($A$) und nicht aggregierte Datenflüsse ($E$) umfassen.

9.  Verfahren nach Anspruch 8,
    **dadurch gekennzeichnet, dass** im Hierarchiegraphen ($H$) die physikalischen Netzwerkverbindungen ($S$) als Wurzeln, die nicht aggregierten Datenflüsse ($E$) als Blätter und die aggregierten Datenflüsse ($A$) zwischen den Wurzeln und den Blättern angeordnet werden.

10. Verfahren nach einem der Ansprüche 5 bis 9,
    **dadurch gekennzeichnet, dass** der Hierarchiegraph ($H$) mittels sukzessiven Einfügens von Knoten ($F$) erstellt wird.

11. Verfahren nach einem der Ansprüche 5 bis 10,
    **dadurch gekennzeichnet, dass** während des Erstellens oder im Anschluss an das Erstellen des Hierarchiegraphen ($H$) alle Knoten ($F$) geändert, gelöscht oder nicht eingefügt werden, welche die graphentheoretischen Randbedingungen nicht erfüllen.

12. Verfahren nach einem der Ansprüche 5 bis 11,
    **dadurch gekennzeichnet, dass** die Knoten ($F$) **dadurch** ermittelt werden, dass zu einem gegebenen Musterpfad ($p$) innerhalb des Hierarchiegraphen ($H$) jeweils ein Knoten ($F$) gesucht wird, der den Musterpfad ($p$) ganz oder teilweise enthält.

13. Verfahren nach einem der Ansprüche 1 bis 12,
    **dadurch gekennzeichnet, dass** das Netzwerk einen oder mehrere Router ($R$) umfasst und beim Bewerten des Hierarchiegraphen ($H$) die zu verwaltenden Zustandsinformationen für jeden Router ($R$) separat ermittelt werden.

14. Verfahren nach einem der Ansprüche 1 bis 13,
    **dadurch gekennzeichnet, dass** der Hierarchiegraph ($H$) mittels einer Kostenfunktion bewertet wird.

15. Verfahren nach einem der Ansprüche 1 bis 14,
    **dadurch gekennzeichnet, dass** beim Bewerten des Hierarchiegraphen ($H$) zwischen RSVP-Zustandsinformationen und MPLS-Zustandsinformationen unterschieden wird.

16. Verfahren nach Anspruch 15,
    **dadurch gekennzeichnet, dass** zur Ermittlung der RSVP-Zustandsinformationen die Anzahl der Söhne einer physikalischen Netzwerkverbindung ($S$) oder eines aggregierten Datenflusses ($A$) bestimmt wird.

17. Verfahren nach Anspruch 15 oder 16,
    **dadurch gekennzeichnet, dass** zur Ermittlung der MPLS-Zustandsinformationen die Anzahl der Väter einer physikalischen Netzwerkverbindung ($S$) oder eines aggregierten Datenflusses ($A$) bestimmt wird.

18. Verfahren nach einem der Ansprüche 1 bis 17,
    **dadurch gekennzeichnet, dass** eine Mehrzahl unterschiedlicher Hierarchiegraphen ($H$) ermittelt und bewertet wird und der am besten bewertete Hierarchiegraph ($H$) zur Konfiguration des Netzwerks herangezogen wird.

19. Verfahren nach einem der Ansprüche 1 bis 18,
    **dadurch gekennzeichnet, dass** bei einer ersten Aggregation nicht aggregierte Datenflüsse ($E$) mittels MPLS zu LSP-Datenflüssen ($A$) aggregiert werden.

20. Verfahren nach Anspruch 19,
    **dadurch gekennzeichnet, dass** bei nachfolgenden Aggregationen die LSP-Datenflüsse ($A$) hierarchisch weiter aggregiert werden.

21. Computerprogrammprodukt mit auf einem computerlesbaren Datenträger gespeicherten Programmcode zur Durchführung der einzelnen Schritte des Verfahrens nach einem der Ansprüche 1 bis 20, wenn das Computerprogrammprodukt auf einem Computersystem (100) abläuft.

22. Digitales Speichermedium mit elektronisch auslesbaren Steuersignalen, die derart mit einem programmierbaren Computersystem (100) zusammenwirken, dass die einzelnen Schritte des Verfahrens nach einem der Ansprüche 1 bis 20 ausgeführt werden.

23. Computersystem (100) zum Ermitteln einer virtuellen Hierarchie von mittels Tunnels mehrfach aggregierten Datenflüssen in einem Netzwerk, mit:

    - einem ersten Speicherbereich (110) zum Abspeichern einer Netzwerktopologie ($N$) und von Informationen betreffend Datenflüsse ($E$) innerhalb des Netzwerks;
    - einem zweiten Speicherbereich (120) zum Abspeichern von aus netzwerktechnischen Anforderungen abgeleiteten, graphentheoretischen Randbedingungen;
- einer Einheit (130) zum Erstellen eines Hierarchiegraphen (*H*) auf der Grundlage der Netzwerktopologie (*N*) und der Informationen betreffend die Datenflüsse innerhalb des Netzwerks unter Berücksichtigung der graphentheoretischen Randbedingungen; und
- einer Einheit (140) zum Bewerten des erstellten Hierarchiegraphen (*H*) im Hinblick auf den Umfang der Zustandsinformationen, welche innerhalb des Netzwerks oder eines Teils des Netzwerks für die Realisierung einer dem Hierarchiegraphen (*H*) entsprechenden Netzwerkkonfiguration zu verwalten sind.

**24.** Computernetzwerk enthaltend ein Computersystem (100) gemäß Anspruch 23.

**Claims**

**1.** A method for the computer-based determination of a virtual hierarchy of data flows in a network, which are multiply aggregated by means of tunnels, comprising:

- providing a network topology (*N*) and information concerning the data flows (*E*) within the network;
- providing graph-theoretical boundary conditions which are derived from network technical requirements; and
- preparing a hierarchical graph (*H*) on the basis of the network topology (*N*) and the information concerning the data flows (*E*) within the network under consideration of the graph-theoretical boundary conditions,
- wherein the hierarchical graph (*H*) is prepared under the aspect of minimising of status information which is to be managed within the network or a part of the network.

**2.** The method according to Claim 1, further comprising:

- evaluation of the hierarchical graph (*H*) with respect to the status information which is to be managed within the network or a part of the network for the realisation of the network configuration which corresponds to the hierarchical graph (*H*).

**3.** The method according to one of Claims 1 and 2,
**characterised in that** graph-theoretical operators are used for preparing the hierarchical graph (*H*).

**4.** The method according to one of Claims 1 to 3, further comprising the configuration of the network according to the prepared hierarchical graph (*H*).

**5.** The method according to one of Claims 1 to 4,
**characterised in that** the hierarchical graph (*H*) comprises nodes (*F*) and transport relations (7) between the nodes (*F*).

**6.** The method according to Claim 5,
**characterised in that** the transport relations (7) include directional information.

**7.** The method according to Claim 5 or 6,
**characterised in that** the transport relations (7) indicate a father-son relationship within the hierarchy of the nodes (*F*).

**8.** The method according to one of Claims 6 and 7,
**characterised in that** the nodes (*F*) comprise at least physical network connections (*S*), singly or multiply aggregated data flows (*A*) and non-aggregated data flows (*E*).

**9.** The method according to Claim 8,
**characterised in that** the physical network connections (*S*) are arranged as roots, the non-aggregated data flows (*E*) as leaves and the aggregated data flows (*A*) between the roots and the leaves in the hierarchical graph (*H*).

**10.** The method according to one of Claim 5 to 9,
**characterised in that** the hierarchical graph (*H*) is prepared by means of the successive insertion of nodes (*F*).

**11.** The method according to one of Claims 5 to 10,

**characterised in that** during or following the preparation if the hierarchical graph (*H*) all nodes (*H*) are changed, deleted or not inserted which do not meet the graph-theoretical boundary conditions.

12. The method according to one of Claims 5 to 11,
**characterised in that** the nodes (*F*) are determined by searching for a respective node (*F*) for a given pattern path (p) within the hierarchical graph (*H*), which completely or partially includes the pattern path (p),

13. The method according to one of Claim 1 to 12,
**characterised in that** the network comprises one or several routers (*R*) and that in the evaluation of the hierarchical graph (*H*) the status information to be managed are separately determined for each router (*R*).

14. The method according to one of Claims 1 to 13,
**characterised in that** the hierarchical graph (*H*) is evaluated by means of a cost function.

15. The method according to one of Claims 1 to 14,
**characterised in that** RSVP status information and MPLS status information are distinguished in the evaluation of the hierarchical graph (*H*).

16. The method according to Claim 15,
**characterised in that** the number of sons of a physical network connection (*S*) or of an aggregated data flow (*A*) is determined in order to determine the RSVP status information.

17. The method according to Claim 15 or 16,
**characterised in that** the number of fathers of a physical network connection (*S*) or of an aggregated data flow (*A*) is determined for the determination of the MPLS status information.

18. The method according to one of Claims 1 to 17,
**characterised in that** a plurality of different hierarchical graphs (*H*) is determined and evaluated and the hierarchical graph (*H*) which is evaluated as the best is used for the configuration of the network.

19. The method according to one of Claims 1 to 18,
**characterised in that** non-aggregated data flows (*E*) are aggregated to LSP data flows (*A*) by means of MPLS in a first aggregation.

20. The method according to Claim 19,
**characterised in that** the LSP data flows (*A*) are further hierarchically aggregated in the subsequent aggregations.

21. A computer program product with a program code which is stored on a computerreadable data carrier for the execution of the individual steps of the method according to one of Claims 1 to 20 if the computer program product runs on a computer system (100).

22. A digital storage medium with electronically readable control signals which cooperate with a programmable computer system (100) in such a manner that the individual steps of the method are executed according to one of Claims 1 to 20.

23. A computer system (100) for determining a virtual hierarchy of data flows in a network, which are multiply aggregated by means of tunnels, comprising:

- a first storage area (110) for storing a network topology (*N*) and information concerning data flows (*E*) within the network;
- a second storage area (120) for storing graph-theoretical boundary conditions which are derived from network technical requirements;
- a unit (130) for preparing a hierarchical graph (*H*) on the basis of the network topology (*N*) and the information concerning the data flows within the network under consideration of the graph-theoretical boundary conditions; and
- a unit (140) for evaluating the prepared hierarchical graph (*H*) with respect to the amount of status information which is to be managed within the network or a part of the network for the realisation of a network configuration which corresponds to the hierarchical graph (*H*).

**24.** A computer network, comprising a computer system (100) according to Claim 23.

**Revendications**

**1.** Procédé permettant la détermination assistée par ordinateur d'une hiérarchie virtuelle de flux de données regroupés plusieurs fois à l'aide de tunnels à l'intérieur d'un réseau, comportant :

- la mise à disposition d'une topologie de réseau (**N**) et d'informations concernant les flux de données (**E**) à l'intérieur du réseau ;
- la mise à disposition de conditions limites relatives à la théorie des graphes et dérivées des exigences techniques spécifiques au réseau ;
- l'élaboration d'un graphe hiérarchique (**H**) sur la base de la topologie de réseau (**N**) et des informations concernant les flux de données (**E**) à l'intérieur du réseau, en tenant compte des conditions limites relatives à la théorie des graphes ;
- le graphe hiérarchique (**H**) étant élaboré sous l'angle d'une minimisation des informations d'état à gérer à l'intérieur du réseau ou d'une partie du réseau.

**2.** Procédé selon la revendication 1, comportant en outre :

- l'évaluation du graphe hiérarchique (**H**) eu égard aux informations d'état à gérer à l'intérieur du réseau ou d'une partie du réseau pour l'élaboration de la configuration de réseau correspondant au graphe hiérarchique (**H**).

**3.** Procédé selon l'une des revendications 1 et 2,
**caractérisé en ce qu'**il est utilisé des opérateurs relatifs à la théorie des graphes pour l'élaboration du graphe hiérarchique (**H**).

**4.** Procédé selon l'une des revendications 1 à 3, comportant en outre la configuration du réseau conformément au graphe hiérarchique (**H**) élaboré.

**5.** Procédé selon l'une des revendications 1 à 4,
**caractérisé en ce que** le graphe hiérarchique (**H**) comprend des noeuds (**F**) et des relations de transport (**T**) entre lesdits noeuds (**F**).

**6.** Système selon la revendication 5,
**caractérisé en ce que** les relations de transport (**T**) contiennent des informations concernant la direction.

**7.** Système selon la revendication 5 ou 6,
**caractérisé en ce que** les relations de transport (**T**) rendent reconnaissable une relation entre père et fils à l'intérieur de la hiérarchie des noeuds (**F**).

**8.** Procédé selon l'une des revendications 6 et 7,
**caractérisé en ce que** les noeuds (**F**) comprennent au moins des connexions de réseau (**S**) physiques, des flux de données regroupés une ou plusieurs fois (**A**) et des flux de données non regroupés (**E**).

**9.** Procédé selon la revendication 8,
**caractérisé en ce qu'**à l'intérieur du graphe hiérarchique (**H**), les connexions de réseau (**S**) physiques sont disposées comme des racines, les flux de données non regroupés (**E**) comme des feuilles et les flux de données regroupés sont agencés entre les racines et les feuilles.

**10.** Procédé selon l'une des revendications 5 à 9,
**caractérisé en ce que** le graphe hiérarchique (**H**) est élaboré au moyen d'ajouts successifs de noeuds (**F**)

**11.** Procédé selon l'une des revendications 5 à 10,
**caractérisé en ce qu'**en cours d'élaboration ou à la suite de l'élaboration du graphe hiérarchique (**H**), tous les noeuds (**F**), qui ne remplissent pas les conditions limites relatives à la théorie des graphes, sont modifiés, supprimés ou non ajoutés.

**12.** Procédé selon l'une des revendications 5 à 11,
**caractérisé en ce que** la détermination des noeuds (**F**) consiste à rechercher à chaque fois, pour un chemin-modèle donné (p) à l'intérieur du graphe hiérarchique (**H**), un noeud (**F**) contenant tout ou pour partie le chemin-modèle (p).

**13.** Procédé selon l'une des revendications 1 à 12,
**caractérisé en ce que** le réseau comprend un ou plusieurs routeurs (**R**) et **en ce que**, lors de l'évaluation du graphe hiérarchique (**H**), les informations d'état à gérer sont déterminées séparément pour chaque routeur (**R**).

**14.** Procédé selon l'une des revendications 1 à 13,
**caractérisé en ce que** le graphe hiérarchique (**H**) est évalué au moyen d'une fonction de coûts.

**15.** Procédé selon l'une des revendications 1 à 14,
**caractérisé en ce que** lors de l'évaluation du graphe hiérarchique (**H**), une différence est faite entre les informations d'état RSVP et les informations d'état MPLS.

**16.** Procédé selon la revendication 15,
**caractérisé en ce qu'**il est calculé le nombre de fils d'une connexion de réseau physique (**S**), ou d'un flux de données regroupé (**A**) pour déterminer les informations d'état RSVP.

**17.** Procédé selon la revendication 15 ou 16,
**caractérisé en ce qu'**il est calculé le nombre de pères d'une connexion de réseau physique (**S**) ou d'un flux de données regroupé (**A**) pour déterminer les informations d'état MPLS.

**18.** Procédé selon l'une des revendications 1 à 17,
**caractérisé en ce qu'**il est calculé et évalué une multiplicité de graphes hiérarchiques (**H**) différents et qu'il est utilisé pour la configuration du réseau le graphe hiérarchique (**H**) bénéficiant de la meilleure évaluation.

**19.** Procédé selon l'une des revendications 1 à 18,
**caractérisé en ce que** lors d'un premier regroupement, les flux de données non regroupés (**E**) sont regroupés au moyen de MPLS pour former des flux de données LSP (**A**).

**20.** Procédé selon la revendication 19,
**caractérisé en ce que** les flux de données LSP (**A**) continuent d'être regroupés hiérarchiquement lors de regroupements suivants.

**21.** Produit de programme d'ordinateur avec code de programme mémorisé sur un support de données lisible électroniquement pour la mise en oeuvre des différentes étapes du procédé selon l'une des revendications 1 à 20 lorsque le produit de programme d'ordinateur tourne sur un système informatique (100).

**22.** Support de stockage numérique à signaux de commande lisibles électroniquement qui interagissent de telle sorte avec un système informatique (100) programmable que les différentes étapes du procédé sont réalisées selon l'une des revendications 1 à 20.

**23.** Système informatique (100) pour déterminer une hiérarchie virtuelle de flux de données regroupés plusieurs fois à l'aide de tunnels à l'intérieur d'un réseau, comportant :

- une première zone de stockage (110) pour mémoriser une topologie de réseau (**N**) et des informations concernant les flux de données (**E**) à l'intérieur du réseau ;
- une deuxième zone de stockage (120) pour mémoriser des conditions limites relatives à la théorie des graphes et dérivées des exigences techniques spécifiques au réseau ;
- une unité (130) pour élaborer un graphe hiérarchique (**H**) sur la base de la topologie de réseau (**N**) et des informations concernant les flux de données à l'intérieur du réseau, en tenant compte des conditions limites relatives à la théorie des graphes ; et
- une unité (140) pour évaluer le graphe hiérarchique (**H**) élaboré eu égard à l'ampleur des informations d'état à gérer à l'intérieur du réseau ou d'une partie du réseau, pour l'élaboration d'une configuration de réseau correspondant au graphe hiérarchique (**H**).

**24.** Réseau d'ordinateur contenant un système informatique (100) selon la revendication 23.

**Fig. 1**

Fig. 2

Fig. 3

Fig. 4

Fig. 5

Fig. 6

TIEFENSUCHE

**Input:**    zu behandelnder Knoten $f$; bisher längster Knoten $l$;
              Musterpfad $p$

 **if** $length(path(f) \cap p) > length(path(l) \cap p)$ and *Bedingung* **then**

  $l \leftarrow f$ {$f$ wird neuer längster Knoten}

 **end if**

 **if** $(f[0] \in p)$ **or** $(f[length(f) - 1] \in p)$ **then** {kein Abbruch}

  **for all** $g \in sons(f)$ **do** {Suche bei allen Söhnen von $f$}

   $l \leftarrow$ TIEFENSUCHE$(g, l, p)$

  **end for**

 **end if**

**Output:** Knoten $l$

# Fig. 7

SUCHE NACH MAXIMALEM TEILPFAD

**Input:** Musterpfad $p$

 $SegList \leftarrow p$

 $l \leftarrow newNode()$

 **while** $SegList \neq \emptyset$ **do** {nichtgefundene Segmente existieren}

  $s \leftarrow SegList[0]$

  $f \leftarrow$ TIEFENSUCHE$(root(s), root(s), p)$

  **if** $length(path(f) \cap p) > length(path(l) \cap p)$ **then**

   $l \leftarrow f$ {$f$ wird neuer längster Knoten}

  **end if**

  **for** $i = 0, \ldots, length(path(f) \cap SegList)$ **do**

   $popSegment(SegList)$ {gefundene Segmente entfernen}

  **end for**

 **end while**

**Output:** Knoten $l$

# Fig. 8

Fig. 9

Fig. 10

FÜLLEN MIT MAXIMALEN PFADEN

Input:   Knoten $f$
  while UNVERBUNDENE TEILPFADE($f$) $\neq \emptyset$ do
    $u \leftarrow$ entnehme aus(UNVERBUNDENE TEILPFADE($f$))
    $g \leftarrow$ SUCHE NACH MAXIMALEM TEILPFAD($u$)
    if $g \subseteq u$ then   {$f$ kann sofort an $g$ angehängt werden}
      DIREKTES ANHÄNGEN($g, f$)
    else   {Hilfsknoten muss verwendet werden}
      ANHÄNGEN MITTELS HILFSKNOTEN($g, f, u$)
    end if
  end while

# Fig. 11

SEITLICHES ANSETZEN MIT MAXIMALEN PFADEN

Input:   Knoten $f$
  $g \leftarrow$ SUCHE MAXIMALEN TEILPFAD($path(f)$)
  if $g \subseteq f$ then   {zuerst mit längstem Knoten verbinden}
    DIREKTES ANHÄNGEN($g, f$)
  else
    ANHÄNGEN MITTELS HILFSKNOTEN($g, f, g \cap f$)
  end if
  while UNVERBUNDENE TEILPFADE($f$) $\neq \emptyset$ do
    $u \leftarrow$ entnehme aus(UNVERBUNDENE TEILPFADE($f$))
    if $f[0] \in u$ then   {unverbundener Teilpfad auf linker Seite}
      $s \leftarrow u[length(u) - 1]$   {Randsegment für Suche ermitteln}
    else   {unverbundener Teilpfad auf rechter Seite}
      $s \leftarrow u[0]$
    end if
    $g \leftarrow$ SUCHE MAXIMALEN TEILPFAD MIT SEGMENT($u, s$)
    if $g \subseteq u$ then
      DIREKTES ANHÄNGEN($g, f$)
    else
      ANHÄNGEN MITTELS HILFSKNOTEN($g, f, u$)
    end if
  end while

# Fig. 12

Fig. 13

Fig. 14

Fig. 15

*Zustände pro*
*Anfangsrouter* = *Anzahl Söhne (Verkehr T)*

Fig. 16

Fig. 17

**MPLS-Zustands-Reduzierung**
**Netzwerk-Knoten N = 32, Verkehr T = 1,**
**Beta = 95%, Meßreihen m = 55**

☐ Auffüllen mit max. ent. Pfaden
■ Ansetzen mit max. ent. Pfaden
☐ Auffüllen mit max. Pfaden
▨ Ansetzen mit max. Pfaden

longestFirst   thinnestFirst   random   shortestFirst   thickestFirst

Einfüge-Reihenfolgen

# Fig. 18

**QoS-Zustäands-Reduzierung**
**Strategie: Auffüllen mit maximalen und enthaltenen Pfaden**
**Reihenfolge: shortestFirst, N=32, Beta = 95%, m = 10**

—✕— max(Q1)/max(Q0)
—●— max(Q2)/max(Q0)
— — analytisches Minimum

1   10   100   1000   10000   100000

# Fig. 19

T Transportflüsse pro Link

**EP 1 402 687 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. Li ; Y. Rekhter.** *RFC2430: A Provider Architecture for Differentiated Services and Traffic Engineering (PASTE),* Oktober 1998, ftp.isi.edu/in-notes/rfc2430.txt

- **K. Ravindran ; T. J. Gong.** Resource Allocation Control Protocols For Multicast Data Transport. *Computer communications and networks,* 22. September 1997, 182-188